Europäisches Patentamt

European Patent Office

Office européen des brevets

(19)

(11) Veröffentlichungsnummer : **0 579 694 B1**

# (12) EUROPÄISCHE PATENTSCHRIFT

(45) Veröffentlichungstag der Patentschrift :
**13.12.95 Patentblatt 95/50**

(51) Int. Cl.[6] : **H02P 5/40, H02P 7/62, H02P 7/00, H02P 6/04**

(21) Anmeldenummer : **92908609.8**

(22) Anmeldetag : **08.04.92**

(86) Internationale Anmeldenummer :
**PCT/AT92/00049**

(87) Internationale Veröffentlichungsnummer :
**WO 92/19038 29.10.92 Gazette 92/27**

(54) **VERFAHREN UND SCHALTUNGSANORDNUNGEN ZUR BESTIMMUNG MASCHINENBEZOGENER ELEKTROMAGNETISCHER UND MECHANISCHER ZUSTANDSGRÖSSEN AN ÜBER UMRICHTER GESPEISTEN ELEKTRODYDYNAMISCHEN DREHFELDMASCHINEN**

(30) Priorität : **11.04.91 AT 766/91**
**19.04.91 AT 823/91**
**11.10.91 AT 2027/91**
**18.10.91 AT 2076/91**
**07.04.92 AT 724/92**

(43) Veröffentlichungstag der Anmeldung :
**26.01.94 Patentblatt 94/04**

(45) Bekanntmachung des Hinweises auf die
Patenterteilung :
**13.12.95 Patentblatt 95/50**

(84) Benannte Vertragsstaaten :
**AT BE CH DE DK ES FR GB GR IT LI NL SE**

(56) Entgegenhaltungen :
**WO-A-90/12278**
**DE-A- 3 820 125**

(56) Entgegenhaltungen :
**IEEE TRANSACTIONS ON INDUSTRIAL ELEC-TRONICS AND CONTROL Bd. 38, Nr. 2, April 1991, NEW YORK US Seiten 95 - 101; SANJIB KUMAR PANDA AND GEHAN AMARATUNGA: 'Comparison of Two Techniques for Closed-Loop Drive of VR Step Motors Without Direct Rotor Position Sensing'**
**FOURTH INTERNATIONAL CONFERENCE ON POWER ELECTRONICS AND VARIABLE SPEED DRIVES 17. Juli 1990, LONDON, UK Seiten 249 - 252; N.H. MVUNGI ET AL.: 'A new sensorless position detection for SR drives'**

(73) Patentinhaber : **ELIN ENERGIEANWENDUNG GESELLSCHAFT M.B.H.**
**Penzinger Strasse 76**
**A-1141 Wien (AT)**

(72) Erfinder : **SCHRÖDL, Manfred**
**Untere Hauptstra e 76**
**A-7223 Sieggraben (AT)**
Erfinder : **ENSBACHER, Richard**
**An den Eisteichen 24**
**A-1120 Wien (AT)**

(74) Vertreter : **Krause, Peter**
**c/o Elin Energieanwendung GMBH,**
**Penzinger Strasse 76**
**A-1141 Wien (AT)**

## Beschreibung

Die Erfindung betrifft Verfahren und Schaltungsanordnungen zur Bestimmung maschinenbezogener elektromagnetischer und mechanischer Zustandsgrößen an über Umrichter gespeisten elektrodynamischen Drehfeldmaschinen wie Asynchronmaschinen, Synchronmaschinen und Reluktanzmaschinen, wobei bei der Synchronmaschine die Rückwirkung von an die Synchronmaschine abgesetzten elektrischen Meßsignalen gemessen wird, und wobei die Meßsignale vom Umrichter selbst generierte Spannungssprünge sind, die Stromänderungen bewirken, welche gemessen und einem Rechner zugeführt werden, der eine komplexe Kenngröße ermittelt und aus der Winkelabhängigkeit der Statorreaktanz die Rotorstellung berechnet, und wobei zum Start der Synchronmaschine eine Vormagnetisierung eingestellt wird.

Umrichtergespeiste Asynchron-, Synchron- und Reluktanzmaschinen gewinnen durch die Fortschritte auf dem Sektor der Leistungs- und Informationselektronik zunehmend an Bedeutung in der Antriebstechnik.

Asynchronmaschinen:

Asynchronmaschinen zeichnen sich gegenüber Synchron- und Gleichstrommaschinen durch höhere Robustheit und geringere Herstellungskosten aus. Für die Durchführung der Regelalgorithmen bei dynamisch hochwertigen feldorientierten Regelkonzepten ergibt sich bei tiefen Drehzahlen der Asynchronmaschinen die Notwendigkeit eines mechanischen Gebers zur Erfassung der Rotorlage oder Rotorgeschwindigkeit. Asynchronmaschinen können ohne Lagegeber und Tachogeneratoren dynamisch hochwertig betrieben werden, wenn die Drehzahl einen gewissen Minimalwert überschreitet, so daß aus der induzierten Spannung der magnetische Fluß aus elektrischen Größen berechnet werden kann. Im tiefen Drehzahlbereich ist dies bisher noch nicht gelungen. Es ist daher das Ziel vieler Forschungsaktivitäten, den mechanischen Geber durch mathematische Modelle und/oder durch Ausnützung physikalischer Effekte zu ersetzen.

In der Zeitschrift "etzArchiv", Bd. 12/1990/H. 11, Seite 349 bis 351, befaßt sich der Artikel "Determination of the stator flux space vector of saturated AC machines" mit ebendieser Problematik. Konkret wird dabei eine Methode vorgestellt, die es ermöglicht, bei einer Wechselstrommaschine, die über eine pulsbreitenmodulierte Wechselrichterstufe angespeist wird, eine Echtzeitbestimmung des Statorspannungszeigers jeweils einmal innerhalb einer Schwingungdauer durchzuführen. Mit dieser Methode können die Meßfehler der zur Berechnung benötigten Werte der Phasenströme und -spannungen einigermaßen klein gehalten werden. Rotorgeschwindigkeitsmessungen wer

den hiezu nicht benötigt.

Nachteilig bei dieser Methode ist, daß explizit Induktivitäten berechnet werden, und deshalb jedenfalls eine Spannungsmessung notwendig ist.

In der Dissertation "Entwurf und Aufbau eines nichtlinearen Zustands- und parameterbeobachters für transient betriebene Asynchronmaschinen" von Manfred Schrödl (Technische Universität Wien, 1987, Seite 14 f.) wird die Ermittlung des Rotorflusses aus der Statorgleichung bei Drehstrommaschinen behandelt. Dabei wird ein "Spannungsmodell" zur Hilfe genommen, welches auf der Formel $\dot{\Psi}_R = \dfrac{X_R}{X_H} \cdot (\underline{u}_S -$ $\underline{i}_S \cdot r_S - \delta X_S \underline{\dot{i}}_S)$ basiert, wobei

$\Psi_R$    Rotorflußraumzeiger

$X_R$    bezogene Reaktanz

$X_H$    bezogene Hauptfeldreaktanz

$\underline{u}_S$    Statorspannungsraumzeiger

$\underline{i}_S$    Statorstromraumzeiger

$r_S$    bezogener statorwiderstand

$\delta$    Streukoeffizient

$X_S$    bezogene Statorreaktanz

•    zeitliche Ableitung

bedeutet.

Das Modell bietet den Vorteil, daß der Fluß allein aus der Messung elektrischer Größen bestimmt werden kann, somit kein elektrischer Geber erforderlich ist.

Wie aus der Formel ersichtlich, wirken sich bei großen Spannungsraumzeigerbeträgen - das entspricht hohen Drehzahlen - die stromabhängigen Terme, insbesondere bei geringer Belastung, nur schwach auf den Flußwert aus. Es kann also in diesen Betriebsbereichen mit einer guten Genauigkeit gerechnet werden.

Der Nachteil der vorgestellten Meßmethode besteht darin, daß - dies ergibt sich aufgrund der aus der Formel ersichtlichen Integration ohne Rückkopplung - der Einfluß von Meßfehlern und des temperaturabhängigen Statorwiderstandes sowie bei analogem Aufbau die Drift der Integratoren die Modellqualität zunehmend verschlechtern.

Synchronmaschinen:

Die Bedeutung der Synchronmaschinen nahm, nebst anderen Faktoren, auch durch die Verbesserungen auf dem Sektor der Magnetmaterialien zu. Verglichen mit Asynchronmaschinen, weisen die Synchronmaschinen eine einfachere regelungstechnische Struktur und - aufgrund der sehr geringen Rotorverluste - einen höheren Wirkungsgrad auf.

Auch bei Synchronmaschinen ergibt sich für die Durchführung der Regelalgorithmen bei dynamisch hochwertigen feld- bzw. polradorientierten Regelkonzepten die Notwendigkeit eines mechanischen Gebers zur Erfassung der Polradposition. Es sind seit längerer Zeit Bemühungen im Gange, den mechanischen Geber durch mathematische Modelle oder durch Ausnützung physikalischer Effekte zu ersetzen.

Bisher wurden bereits mehrere Verfahren vorgestellt, mit denen die Lage des Polrades einer permanentmagneterregten Synchronmaschine erfasst werden kann.

Ein derartiges Verfahren wird im Kapitel "Algorithmus zur rechnerischen Erfassung der Polradlage einer permanentmagneterregten Synchronmaschine ohne Lagegeber" von M. Schrödl und T. Stefan im Tagungsbuch (Seite 48 bis 54) der ETG/VDE-Konferenz "Antriebssysteme für die Geräte- und Kraftfahrzeugtechnik", veranstaltet 1988 in Bad Nauheim, BRD, beschrieben. Dabei erfolgt die Erfassung der Polradlage bei Vollpolmaschinen durch Auswertung der induzierten Spannung. Ab einer gewissen mechanischen Drehzahl kann ein dauermagneterregter Rotor selbst als Lagegeber verwendet werden, da ein in einer Statorwicklung induzierter Spannungsraumzeiger im allgemeinen in eindeutiger Weise mit der gesuchten Rotorposition in Zusammenhang steht. Dabei können auch nichtsinusförmige Induktionsverteilungen im Luftspalt zugelassen werden. Dieser induzierte Spannungsraumzeiger kann aus den Klemmenspannungen unter Berücksichtigung der ohmschen und induktiven Spannungsabfälle berechnet werden.

Nachteilig dabei ist, daß diese Auswertung erst ab einer gewissen Mindestdrehzahl erfolgen kann, da der induzierte Spannungsraumzeigerbetrag proportional mit der Drehzahl abnimmt.

Über ein anderes Verfahren berichtet das Kapitel "Detection of the rotor position of a permanent magnet synchronous machine at standstill" von M. Schrödl, enthalten in den Proceedings, die zur "International Conference on Electrical Machines" 1988 in Pisa, Italien, publiziert wurden.

Bei diesem Verfahren wird mittels elektrischer Meßsignale die von den permanenten Magneten hervorgerufene, variierende magnetische Sättigung gemessen. Da sich diese Art der Messung reproduzieren läßt, ist die Rotorposition exakt feststellbar. Die für die Durchführung der Messung notwendige Kenntnis der Polarität der Magnete läßt sich durch Veränderung des magnetischen Arbeitspunktes und die Messung seiner Auswirkung auf die Impedanz feststellen. Es ist hier die Eruierung der Rotorpostion auch bei stillstehender Maschine möglich.

Der Nachteil dieser Methode besteht darin, daß durch die Notwendigkeit einer zusätzlichen analogen Stromquelle das Meßverfahren sehr aufwendig ist.

Auch die Dissertation "Die permanenterregte umrichtergespeiste Synchronmaschine ohne Polradgeber als drehzahlgeregelter Antrieb" von H. Vogelmann (Universität Karlsruhe, BRD, 1986) befasst sich mit einem Verfahren zur Ortung der Polradlage. Dabei wird ein mittels eines Umrichters erzeugter, relativ hochfrequenter Strom als Prüfsignal dem eigentlichen Nutzsignal überlagert. Der Grundgedanke dabei ist, daß ein in eine gewisse (Raumzeiger-) Richtung aufgeschaltetes elektrisches Wechselsignal aufgrund der unterschiedlichen Induktivitäten in Längs- und Querachse im allgemeinen auch in der orthogonalen Richtung eine Reaktion hervorruft. Nur für den Fall, daß das Wechselsignal genau in der RotorLängs- bzw. -Querrichtung aufgebracht wird, tritt eine derartige Verkopplung nicht auf. Damit ergibt sich ein Kriterium, ob das Signal in die gesuchte ausgezeichnete Richtung appliziert wird oder nicht. Eine Voraussetzung zur Erreichung exakter Meßergebnisse ist eine permanentmagneterregte Synchronmaschine mit Schenkelpolcharakter, also mit ungleichen Induktivitäten in Längs- und Querrichtung, wie etwa bei flußkonzentrierenden Anordnungen.

Der überwiegende Teil der permanentmagneterregten Synchronmaschinen wird jedoch nicht in flußkonzentrierender Bauweise ausgeführt, sondern mit konstantem Luftspalt und auf die Rotoroberfläche aufgeklebten Magneten. Dies ist fertigungstechnisch einfacher und erlaubt bei Verwendung von hochwertigen Samarium-Kobalt- bzw. Neodym-Eisen-Magneten Luftspaltinduktionen von etwa 1 Tesla.

Bei den erwähnten Ortungsverfahren besteht also der Nachteil, daß sich damit nur bei Maschinen mit ausgeprägter Schenkelpolcharakteristik brauchbare Ergebnisse ergeben.

Weiters befaßt sich auch die WO-A-9012278 mit einem Verfahren zur sensorlosen Drehwinkelerfassung von dämpferlosen, vorzugsweise permanentmagneterregten, Synchronmaschinen. Dabei wird die Rückwirkung von an die Synchronmaschine abgesetzten Spannungssprüngen gemessen, die von einem zur Synchronmaschine gehörenden Umrichter generiert werden, und aus der Winkelabhängigkeit der Statorreaktanz die Rotorstellung berechnet.

Der Nachteil des Verfahrens lt. WO-A-9012278 besteht darin, daß die Rotorstellung der Maschine lediglich durch die Winkelabhängigkeit der Statorreaktanz berechnet wird. Es ist keine Korrektur der Rotorposition zufolge des Ankerstromes angegeben, lediglich eine Berücksichtigung des Ankerstromeinflusses auf die Statorinduktion.

## Reluktanzmaschine:

Gegenüber elektrisch oder magnetisch erregten Synchron- und Gleichstrommaschinen zeichnen sich Reluktanzmaschinen durch höhere Robustheit aus. Auch bei den Reluktanzmaschinen ergibt sich für die Durchführung der Regelalgorithmen bei dynamisch hochwertigen feld- bzw. rotororientierten Regelkonzepten die Notwendigkeit eines mechanischen Gebers zur Erfassung der Rotorlage bzw. Rotorgeschwindigkeit. Dadurch wird jedoch die Robustheit der Maschine herabgesetzt und die Kosten werden erhöht. So wie bei Drehfeldmaschinen anderen Typs ist es auch bei der Reluktanzmaschine das Ziel vieler Forschungsaktivitäten, den mechanischen Geber durch mathematische Modelle und/oder durch Ausnützung physikalischer Effekte zu ersetzen.

Im Artikel "PWM-Based Position Sensorless Control of Variable Reluctance Motor Drives" in den Proceedings (S. 4-024 - 4-029) zur "EPE - European Power Electronics Conference" in Florenz, Italien, 1991, wird ein Verfahren zur sensorlosen Rotorpositionserfassung bei Reluktanzmaschinen vorgestellt. Dieses Verfahren, welches lediglich bei sogenannten "switched reluctance" -Motoren anwendbar ist, beruht darauf, bei spezieller PulsweitenmodulationsSteuerung eine Frequenzanalyse durchzuführen. Durch Division von entsprechend durch Filter und Integrator aufbereiteten Spannungen und Strömen wird auf die rotorpositionsabhängige Induktivität einer momentan stromführenden Wicklung geschlossen.

Bei diesem Verfahren ist nachteilig, daß es bei einem konventionellen Stator mit Drehstromwicklungen nicht anwendbar ist. Weiters sind zur Durchführung des Verfahrens eine Spannungsmessung sowie eine spezielle Pulsweitenmodulation erforderlich.

In lit. 6 desselben Artikels wird unter dem Titel "Mutal inductance effects" ein Verfahren besprochen, bei welchem die Rotorposition eines Reluktanzmotors mittels eines Beobachters (supervisory microcontroller) ermittelt wird.

Auch bei diesem Verfahren besteht der Nachteil darin, daß zur Erfassung der Rotorlage eine Spannungsmessung durchgeführt werden muß.

In einem weiteren Artikel, "A Tourque Angle Calculator for Sensorless Reluctance Motor Drives", derselben Proceedings (S. 4-013 - 4-017) wird ebenfalls ein Verfahren zur sensorlosen Rotorpositionserfassung bei Reluktanzmaschinen vorgeschlagen. Dabei ist der Ansatz zu diesem Verfahren so gewählt, daß eine Realisierung nur für den Fall möglich ist, daß alle zeitlichen Ableitungen vernachlässigt werden.

Diese Verfahren ist nachteilig, weil es nur im (quasi-) stationären Betrieb funktioniert. Ein weiterer Nachteil ergibt sich aus der Notwendigkeit einer Spannungsmessung.

Unter dem Titel "Accurate Sensorless Rotor Position Detection in an SR Motor" in den bereits zitierten Proceedings (S. 1-390 - 1-393) wird ein Verfahren zur Lagebestimmung eines Reluktanzmotors durch Testsignale beschrieben. Dasselbe Verfahren wird mit der Bezeichnung "A New Sensorless Position Detector for SR Drives" in der Conference Publication No. 324 (S. 249 - 252) der "4. International Conference Power Electronics And Variable Speed Drives", London, 1991, vorgestellt. Gegenüber den bereits genannten Verfahren weist dieses den Vorteil auf, daß es nicht nur auf "switched reluctance"-Maschinen, sondern auch bei Maschinen mit normaler Drehstromwicklung im Stator anwendbar ist.

Das Prinzip des Verfahrens besteht darin, daß es in einem "s. r."-Motor ständig Motorphasen gibt, in denen für gewisse Zeit kein Betriebsstrom fließt. In dieser Zeit wird dann ein Testspannungspuls eingeprägt und einerseits die Flußverkettung dieser Wicklung durch Integration der Testspannung ermittelt, anderseits der Stromverlauf in der Wicklung gemessen. Erreicht der Strom einen gewissen Wert, wird die momentane Flußverkettung gemessen und mittels einer Tabelle die korrespondierende Rotorposition ermittelt.

Nachteilig bei diesem Verfahren ist, daß es bei Drehstromwicklungen nicht funktioniert. Weiters ist eine Spannungsmessung notwendig.

Mit einem Verfahren zum Steuern von Induktionsmotoren unter Verwendung eines Frequenzwandlers befaßt sich die DE-A-38 20 125. Dabei werden Befehlswerte für einen Amplitudenwert ($V_{la}$) einer Primärspannung (Klemmenspannung) des Motors und eine Phasendifferenz zwischen der Primärspannung und einer induzierten elektromotorischen Kraft, d. h. der innere Phasenwinkel ($\delta$), arithmetisch auf der Grundlage wenigstens eines Primärfrequenzbefehles ($\omega*_1$) und eines Drehmomentenstrombefehls ($I^*_{lq}$) (oder Drehmomentenbefehls) ermittelt.

Entsprechend diesen Befehlen wird die Ausgangsspannung des Frequenzwandlers gesteuert. Die arithmetische Bestimmung des inneren Phasenwinkels wird auf der Grundlage einer Phasenwinkelkomponente ($\delta_r$) aufgrund des Widerstandsspannungsverlustes und einer Phasenwinkelkomponente ($\delta_1$) aufgrund eines Reaktanzspannungsabfalles in dem Motor getrennt durch eine Annäherung gemäß folgender Annäherungsformel ausgeführt: $\delta = \delta_1 - \delta_r$. Die Ausführung der arithmetischen Bestimmung der Primärspannungsamplitude ($V_l$) erfolgt unter Verwendung des inneren Phasenwinkels ($\delta$). Das Verfahren gestattet somit die Steuerung einer Maschine ohne mechanischen Sensor. Der Grundgedanke dabei ist also, aufgrund eines auf der Spannung basierenden Maschinenmodells (EMK-Modell) eine Sollspannung zu berechnen, die dann von einer Pulsmustersteuerung mittels eines Umrichters eingestellt wird. Durch Parameteradaption werden je nach Betriebspunkt der Statorwiderstand bzw. die Streuinduktivität nachgeführt.

Das in der DE-A-38 20 125 vorgestellte Verfahren beseitigt nicht das grundsätzlich physikalische Problem aller Steuerungen mit EMK-Modell, welches darin besteht, daß durch das Verschwinden der EMK bei geringen Drehzahlen insbesondere bei Drehfeldstillstand, die Beobachtbarkeit der Maschine verschwindet.

Aufgabe der Erfindung ist es, ein Verfahren zur Bestimmung maschinenbezogener elektromagnetischer und mechanischer Zustandsgrößen an elektrodynamischen Drehfeldmaschinen durch Messung

ausschließlich elektrischer Größen zu realisieren und dabei die Nachteile bzw. Ungenauigkeiten der bekannten Verfahren zu vermeiden. Zudem sollen Schaltungsanordnungen zur Durchführung des Verfahrens konzipiert werden.

Die Aufgabe wird durch die Erfindung gelöst. Diese ist, entsprechend Anspruch 1, dadurch gekennzeichnet, daß die Drehfeldmaschine in ihrer Ausbildung als Asynchronmaschine, zur Magnetflußbestimmung und zur dynamisch hochwertigen Momentenaufbringung, vor Beginn der Messung aufmagnetisiert wird, und daß die Rückwirkung von an die Asynchronmaschine abgesetzten Meßsignalen gemessen wird, wobei die Meßsignale vom Umrichter generierte Spannungssprünge sind, die Stromänderungen bewirken, welche gemessen und einem Rechner zugeführt werden, der ein komplexe Kenngröße ermittelt, welche dem Quotienten aus Statorspannungsraumzeiger und zeitlicher Änderung des Statorstromraumzeigers proportional ist, wobei die Richtung des Spannungsraumzeigers aus dem bekannten Umrichter-Ansteuerzustand hervorgeht, im folgenden als komplexe Kenngröße bezeichnet, und den magnetischen Fluß berechnet, wobei die komplexe Kenngröße sowohl in ihrem Realteil als auch in ihrem Imaginärteil mit dem doppelten Wert des magnetischen Flußwinkels näherungsweise sinusförmig schwankt und aus Real- und Imaginärteil den doppelten Wert des gesuchten magnetischen Flußwinkels nach bekannten Methoden der komplexen Rechnung ermittelt.

Der Vorteil des erfindungsgemäßen Verfahrens gegenüber bekannten Methoden, die auch bei tiefen Drehzahlen funktionieren, besteht darin, daß kein mechanischer Geber notwendig ist und daß das Verfahren unempfindlich gegenüber Unsicherheiten im Parameter Rotorwiderstand ist und daß auf Spannungsmessungen verzichtet werden kann. Weiters ist vorteilhaft, daß keine analogen Zusatzstromquellen benötigt werden, sondern der ohnehin vorhandene speisende Umrichter als Meßsignalgenerator eingesetzt wird.

Weitere vorteilhafte Ausgestaltungen der Erfindung, betreffend die Drehfeldmaschine in ihrer Ausbildung als Asynchronmaschine, ergeben sich aus den Ansprüchen 2 bis 22.

Im Rahmen der Erfindung ist, entsprechend Anspruch 23, eine Schaltungsanordnung zur Durchführung eines Verfahrens zur Bestimmung maschinenbezogener elektromagnetischer und mechanischer Zustandsgrößen an über Umrichter gespeisten Asynchronmaschinen vorgesehen. Die Schaltungsanordnung ist erfindungsgemäß dadurch gekennzeichnet, daß die Stromistwerte der Stränge der Statorwicklung der Asynchronmaschine von zwischen einem Umrichter und der Asynchron maschine angeordneten Strommeßeinrichtungen abgenommen und den ersten Eingängen eines Stromerfassungs-Moduls zugefuhrt sind, und daß das Stromerfassungs-Modul am Ausgang über eine erste Leitung eine den Stromraumzeiger zu den Abtastzeitpunkten repräsentierende Information liefert, wobei die Abtastzeitpunkte von einer übergeordneten Steuerung über eine digitale, zweite Leitung definiert sind, wobei die Information von der ersten Leitung zur Ermittlung des Stromänderungsraumzeigers bzw. ihn repräsentierende Größen in einem Stromanstiegsrechner unter Verwendung eines von einer Timereinheit über eine dritte Leitung gelieferten Zeitintervalls eingesetzt ist, wobei die Timereinheit von der übergeordneten Steuerung über eine vierte Leitung gesteuert ist, und daß mit der übergeordneten Steuerung ein Meßablauf unter Verwendung eines Umrichteransteuerzustands-Bildners, gesteuert ist, und daß dabei ein Ansteuerungsmodul des Umrichters durch Umschalten einer Umschaltelogik über eine fünfte Leitung den Umrichteransteuerzustands-Bildner ansteuert, welcher - von der übergeordneten Steuerung über eine sechste Leitung gesteuert - Meßsignale erzeugt, und daß den Meßsignalen direkt vom Umrichter an die Asynchronmaschine gelegte Spannungsraumzeiger zugeordnet sind, und diese über die sechste Leitung vorliegende Spannungsraumzeigerinformation über eine siebente Leitung gemeinsam mit dem von einer achten Leitung repräsentierten Stromänderungsraumzeiger zur Ermittlung des Flußwinkels in einem Flußwinkelrechner verwendet ist, welcher über eine zehnte Leitung in einem dynamischen Asynchronmotor-Modell, durch mathematische Nachbildung der Asynchronmaschine nach bekannten Methoden verbessert, an einer neunte Leitung zur Verfügung steht, wobei mit dem dynamischen Asynchronmotor-Modell auch gleichzeitig die Drehzahl auf eine 15. Leitung und das Lastmoment auf eine 16. Leitung ermittelbar sind, und daß der Flußwinkel in einem Feldorientierungs- und Stromregelungs-Modul zur Berechnung des betriebsmäßigen Umrichter-Ansteuerzustandes gemäß den bekannten Regeln der feldorientierten Regelung aus Sollwerten von Drehmoment über eine 13. Leitung und der Flußbetrag über eine 14. Leitung und unter Verwendung der Iststrom-Information über eine elfte Leitung verwendet ist, und daß der Umrichter-Ansteuerzustand, über eine zwölfte Leitung und die Umschaltelogik, der betriebsmäßig von der übergeordneten Steuerung an die zwölfte Leitung gelegt ist, an das Ansteuerungsmodul des Umrichters übertragen ist.

Mit dieser Schaltungsanordnung kann, für eine als Asynchronmaschine ausgebildete Drehfeldmaschine, das erfindungsgemäße Verfahren auf einfache Weise auf handelsüblichen Signal- und Mikroprozessoren bzw. -controllern implementiert werden.

Eine Weiterbildung der erfindungsgemäßen Schaltungsanordnung sieht entsprechend Anspruch 24 vor, daß die Verbindung zwischen Flußwinkelrechner und Feldorientierungs und Stromregelungs-Modul über ein dynamisches Asynchronmotor-Modell geführt ist, und daß die Drehzahl bzw. das Lastmoment von einem ersten bzw. einem zweiten Ausgang des dynamischen Asynchronmotor-Modells ber eine erste bzw. eine zweite Leitung einem oder mehreren überlagerten Regelkreisen zugeführt und eingebunden sind.

Damit kann das erfindungsgemäße Verfahren in mehrschleifige Regelungen, beispielsweise Drehzahl- und Drehmomentenregelungen, integriert werden.

Das erfindungsgemäße Verfahren ist, gemäß Anspruch 25, für die Drehfeldmaschine in ihrer Ausbildung als Synchronmaschine dadurch gekennzeichnet, daß die Bestimmung der Rotorposition, mittels der bekannten Methoden der komplexen Rechnung, durch Subtraktion von zwei Stromanstiegsmessungen erfolgt, bei denen in beiden Teilmessungen der gleiche Spannungsraumzeiger anliegt, und wobei die Statorstromraumzeiger, die im Mittel während der beiden Teilmessungen anliegen, so verschieden sein müssen, daß sich die Statorinduktivität aufgrund der unterschiedlichen Statorströme dabei merkbar unterscheidet, wodurch dann die gemessene Differenz der beiden Stromraumzeiger-Änderungsgeschwindigkeiten ein komplexer Zeiger ist, dessen Real- und Imaginärteil mit Rotor-Umlaufgeschwindigkeit oszillieren, so daß das Argument dieses komplexen Zeigers mit der elektrischen Lage des Rotors in eindeutigem Zusammenhang steht.

Der Vorteil des erfindungsgemäßen Verfahrens besteht, in seiner Anwendung für die Synchronmaschine, sowohl in der großen Genauigkeit als auch darin, daß für die Polradortung keine analogen Zusatzstromquellen benötigt werden, sondern der - ohnehin vorhandene - speisende Stromrichter als Meßsignalgenerator eingesetzt wird. Bei diesem Verfahren sind Zweideutigkeiten hinsichtlich der Rotorbestimmung vollkommen ausgeschlossen.

Weitere vorteilhafte Ausgestaltungen der Erfindung, betreffend die Drehfeldmaschine in ihrer Ausbildung als Synchronmaschine, ergeben sich aus den Unteransprüchen 26 bis 31.

Im Rahmen der Erfindung ist, gemäß Anspruch 32, eine Schaltungsanordnung zur Durchführung eines Verfahrens zur Bestimmung maschinenbezogener elektromagnetischer und mechanischer Zustandsgrößen an über Umrichter gespeisten Synchronmaschinen vorgesehen, wobei die zufolge der Spannungssprünge und zur Berechnung der zeitlichen Änderung des Stromraumzeigerbetrages notwendigen Stromänderungen von an zwischen einem Stromrichter und der Synchronmaschine angeordneten Strommeßeinrichtungen abgenommen werden. Die Schaltungsanordnung ist erfindungsgemäß dadurch gekennzeichnet, daß die Istströme vom Ausgang eines Stromerfassungsmoduls jeweils einem ersten Eingang eines Rotorlagerechners und einem ersten Eingang einer Stromnachführungseinrichtung zugeführt sind, und daß die vom Stromerfassungs-Modul erfaßten Istströme über die Strommeßeinrichtungen als analoge Signale 1 - 3 zu Zeitpunkten, die von einem digitalen Steuereingang vorgegeben sind, erfaßt, wobei eine erste Leitung die Istströme in Form von Strangströmen oder statorbezogenen Strangstrom-Raumzeigerkomponenten repräsentiert, und daß der Eingang einer vierten Leitung den betriebsmäßigen Sollstromwert von einer übergeordneten Drehzahl- oder Drehmoment-Steuerung bzw. -Regelung darstellt, und daß ein digitales Steuersignal von einer übergeordneten Steuerung über eine fünfte Leitung ein Stromvorgabemodul darüber informiert, wann ein Meßvorgang abläuft und der betriebsmäßige Sollstromwert außer Kraft ist, und daß neunte Leitungen die Sollströme repräsentieren, die in der Stromnachfuhrungseinrichtung mit den Istwerten verglichen werden, und daß aus der Differenz mittels eines Stromreglers eine 3 bit-Umrichter-Ansteuerinformation erzeugt und über eine von der übergeordneten Steuerung gesteuerte Umschaltelogik über eine dritte Leitung an ein Brückenansteuerungsmodul gelegt ist, und daß die übergeordnete Steuerung Strommeßbefehle generiert, und daß ein Meßsignalgenerator veranlaßt ist, über den digitalen Befehl die Meßsignale vom Umrichter zu generieren, wobei mit den digitalen Signalen auf einer siebenten Leitung die meßsignalkonforme Umrichtersteuerinformation über die von der übergeordneten Steuerung gesteuerte Umschaltelogik an das Brückenansteuerungsmodul über dritte Leitungen gelegt ist, und daß der Rotorlagerechner aus der Umrichter-Ansteuerinformation, die den Spannungsraumzeiger repräsentiert, und den zeitlichen Verläufen der Iststöme, die aktuelle Rotoflage berechnet.

Mit der erfindungsgemäßen Schaltungsanordnung sind die vorangeführten Verfahrensschritte für eine als Synchronmaschine ausgeführte Drehfeldmaschine realisierbar.

Das erfindungsgemäße Verfahren ist, gemäß Anspruch 33, für die Drehfeldmaschine in ihrer Ausbildung als Reluktanzmaschine dadurch gekennzeichnet, daß die Rückwirkung von an die Reluktanzmaschine abgesetzten Meßsignalen gemessen wird, wobei die Meßsignale vom Umrichter generierte Spannungssprünge sind, die entweder zusätzlich eingefügte oder betrieblich auftretende, zur Auswertung geeignete, Signale sind, die Stromänderungen bewirken, welche gemessen und einem Rechner zugeführt werden, der eine komplexe Kenngröße ermittelt, welche dem Quotienten aus Statorspannungsraumzeiger und zeitlicher Änderung des Statorstromraumzeigers proportional oder umgekehrt proportional ist, im folgenden als komplexe Kenngröße bezeichnet, wobei die Richtung des Spannungsraumzeigers aus dem bekannten Umrichter Ansteuerzustand hervorgeht, und die Rotorlage berechnet, wobei die komplexe Kenngröße aufgrund der unterschiedlichen Reaktanzen in Längs- und Querrichtung sowohl in ihrem Realteil als auch in ihrem Imaginärteil mit dem doppelten Wert der Rotorlage näherungsweise sinusförmig schwankt und aus Real- und Imaginärteil den doppelten Wert des gesuchten Rotorlage-winkels nach bekannten Methoden der komplexen Rechnung ermittelt.

Der Vorteil des erfindungsgemäßen Verfahrens gegenüber bekannten Methoden besteht in seiner Anwendung für die Reluktanzmaschine darin, daß kein mechanischer Geber notwendig ist und daß auf Spannungsmessungen verzichtet werden kann. Weiters ist vorteilhaft, daß keine analogen Zusatzstromquellen benötigt werden, sondern der ohnehin vorhandene speisende Umrichter als Meßsignalgenerator eingesetzt wird.

Weitere vorteilhafte Ausgestaltungen der Erfindung, betreffend die Drehfeldmaschine in ihrer Ausbildung als Reluktanzmaschine, sind in den Ansprüchen 34 bis 51 angegeben.

Im Rahmen der Erfindung ist, gemäß Anspruch 52, eine Schaltungsanordnung zur Durchführung eines Verfahrens zur Bestimmung maschinenbezogener elektromagnetischer und mechanischer Zustandsgrößen an über Umrichter gespeisten Reluktanunaschinen vorgesehen. Die Schaltungsanordnung ist erfindungsgemäß dadurch gekennzeichnet, daß die Stromistwerte der Stränge der Statorwicklung der Reluktanzmaschine von zwischen dem Umrichter und der Reluktanzmaschine angeordneten Strommeßeinrichtungen abgenommen und den ersten Eingängen eines Stromerfassungsmoduls zugeführt sind, welches am Ausgang über eine erste Leitung eine den Stromraumzeiger zu den Abtastzeitpunkten repräsentierende, im allgemeinen digitalisierte, Information (entweder Phasenströme oder statorbezogene Komponenten des Stromraumzeigers) liefert, wobei die Abtastzeitpunkte von einer übergeordneten Steuerung über eine zweite, digitale Leitung definiert sind, und wobei die Information von der ersten Leitung zur Ermittlung des Stromänderungsraumzeigers bzw. ihn repräsentierende Größen in einem Stromanstiegsrechner unter Verwendung eines von einer Timereinheit über eine dritte Leitung gelieferten Zeitintervalles verwendet wird, wobei die Timereinheit von der übergeordneten Steuerung über eine vierte Leitung gesteuert ist, und daß mit der übergeordneten Steuerung ein Meßablauf, unter Verwendung eines Umrichteransteuerzustands-Bildners gesteuert ist und dabei ein Ansteuerungsmodul des Umrichters durch Umschalten einer Umschaltelogik über eine fünfte Leitung mit dem Umrichteransteuerzustands-Bildner verbunden ist, welcher - von der übergeordneten Steuerung über eine sechste Leitung gesteuert - Meßsignale erzeugt, welchen direkt vom Umrichter an die Asynchronmaschine gelegte Spannungsraumzeiger zugeordnet sind, und daß diese über die sechste Leitung vorliegende Spannungsraumzeigerinformation über eine siebente Leitung gemeinsam mit dem von einer achten Leitung repräsentierten Stromänderungsraumzeiger zur Ermittlung des Flußwinkels in einem Flußwinkelrechner verwendet wird, welcher über eine zehnte Leitung in einem dynamischen Reluktanzmotor-Modell, durch mathematische Nachbildung der Reluktanzmaschine nach bekannten Methoden verbessert, an eine neunte Leitung zur Verfügung steht, wobei mit dem dynamischen Reluktanunotor-Modell auch gleichzeitig die Drehzahl auf einer 13. Leitung und das Lastmoment auf einer 14. Leitung ermittelbar sind, und daß der Flußwinkel dann im Stromregelungs-Modul zur Berechnung des betriebsmäßigen Umrichter-Ansteuerzustandes gemäß den bekannten Regeln der feldorientierten Regelung aus Sollwerten von Drehmoment über eine 15. Leitung und der Flußbetrag über eine 16. Leitung und unter Verwendung der Iststrom-Information über eine elfte Leitung herangezogen wird, und daß der Umrichter-Ansteuerzustand über eine zwölfte Leitung und die Umschaltelogik, der betriebsmäßig von der übergeordneten Steuerung an die zwölfte Leitung gelegt ist, an das Ansteuerungsmodul des Umrichters übertragen wird.

Mit dieser Schaltungsanordnung kann das erfindungsgemäße Verfahren für eine als Reluktanzmaschine ausgebildete Drehfeldmaschine auf einfache Weise auf handelsüblichen Signal- und Mikroprozessoren bzw. -controllern implementiert werden.

Eine Weiterbildung der erfindungsgemäßen Schaltungsanordnung sieht gemäß Anspruch 53 vor, daß die Verbindung zwischen Rotorlagerechner und Feldorientierungs- und Stromregelungs-Modul über ein dynamisches Reluktanzmaschinen-Modell geführt ist, und daß die Drehzahl bzw. das Lastmoment von einem ersten bzw. einem zweiten Ausgang des dynamischen Reluktanzmaschinen-Modells über eine erste bzw. eine zweite Leitung einem oder mehreren überlagerten Regelkreisen zugeführt und eingebunden sind.

Damit kann das erfindungsgemäße Verfahren in mehrschleifige Regelungen, beispielsweise Drehzahl- und Drehmomentenregelungen, integriert werden.

An Hand von Ausführungsbeispielen soll nun die Erfindung näher erläutert werden. Dabei ist das erfindungsgemäße Prinzip in Fig. 1 auf eine Asynchronmaschine, in Fig. 2 auf eine Synchronmaschine, und in Fig. 3 auf eine Reluktanzmaschine angewendet.

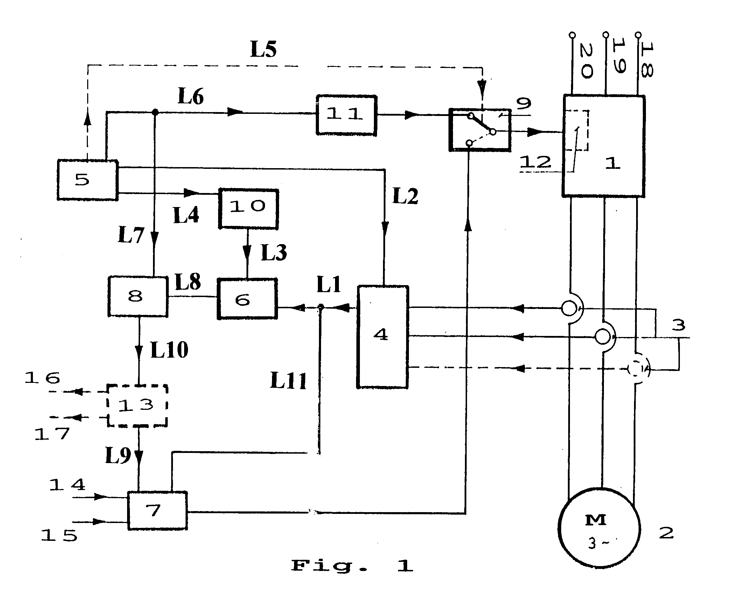

In Fig. 1 wird das neue Verfahren unter Verwendung einer dreisträngigen Asynchronmaschine näher erklärt. (Dasselbe erfindungsgemäße Prinzip ist für Asynchronmaschinen mit anderen Strangzahlen in gleicher Weise anwendbar. )

Fig. 1 zeigt die drei Adern 18, 19, 20 einer Drehstromleitung, die einem Spannungszwischenkreisumrichter 1 zugeführt sind, welcher eine Asynchronmaschine 2 speist. In den Zuleitungen zwischen Spannungszwischenkreisumrichter 1 und Asynchronmaschine 2 sind Strommeßeinrichtungen 3 vorgesehen. Die Stromeßeinrichtungen 3 liefern mit einem Stromerfassungsmodul 4, unter Einbeziehung einer übergeordneten Steuerung 5, welche das Timing übernimmt, den aktuellen Stromraumzeiger . Aus diesem wird, unter Verwendung einer Timer-Einheit 10, in einem Stromanstiegsrechner 6 der Stromänderungsraumzeiger ermittelt. Dieser wird gemeinsam mit der Spannungsraumzeigerrichtungsinformation, die von der übergeordneten Steuerung 5 generiert wird, in einem Flußwinkelrechner 8 zur Berechnung des Flußwinkels herangezogen, welcher in einem Feldorientierungs- und Stromregelungsblock 7, der die Eingänge "Sollmoment" und "Sollmagnetisierung" aufweist, zur Ermittlung des Umrichteransteuerzustandes verwendet wird.

Weiters kann der vom Flußwinkelrechner 8 ermittelte Flußwinkel in überlagerte Regelkreise (etwa Drehzahl- und Drehmomentregelkreise) eingebunden werden. Die übergeordnete Steuerung 5 entscheidet, ob die Umrichteransteuerung im Falle der Durchführung des erfindungsgemäßen Flußwinkel-Bestimmungsalgorithmus in einer Umschaltelogik 9 von einem Spannungsraumzeiger-Bildner 11 oder, im normalen Stromregelfall, vom Feldorientierungs- und StromregelungsModul 7 bewerkstelligt wird.

Da die Summe der der Asynchronmaschine zugeführten Ströme Null sein muß, kann eine Strommeßeinrichtung 3 eingespart werden.

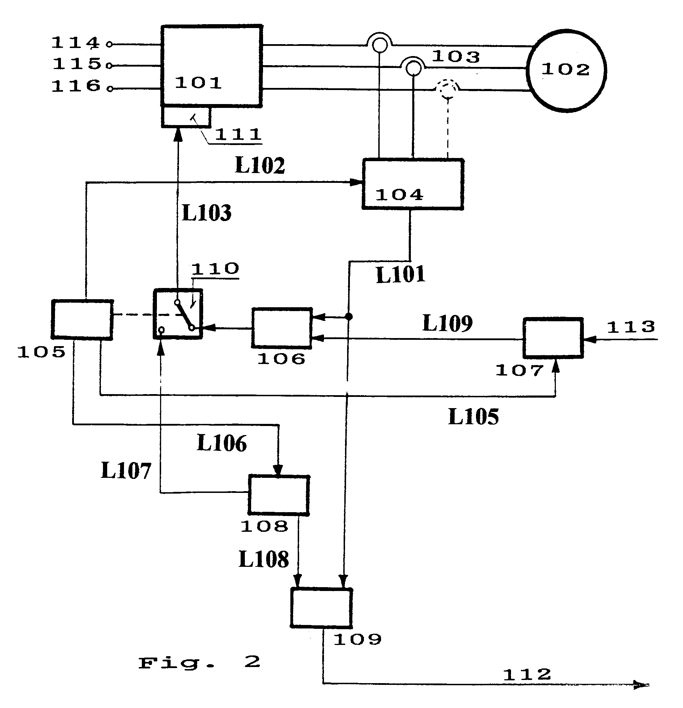

In Fig. 2 ist das erfindungsgemäße Verfahren unter Verwendung einer dreistrangigen Synchronmaschine dargestellt. (Das erfindungsgemäße Prinzip ist für Synchronmaschinen mit anderen Strangzahlen in gleicher Weise anwendbar.

Wie Fig. 2 zeigt, wird eine Synchronmaschine 102 über einen Spannungszwischenkreis-Umrichter 101 von drei Drehstromleitungen 114, 115, 116 gespeist, wobei die Strangströme mit drei Strommeßeinrichtungen 103 erfaßt werden. Es genügt jedoch auch, wenn lediglich zwei Strangströme gemessen werden, da die Stromsumme Null sein muß.

Ein Stromerfassungsmodul 104 wird von einer übergeordneten Steuerung 105 gesteuert und liefert die Istströme zu den Meßzeitpunkten. Diese Istströme werden gemeinsam mit den Sollströmen, die von einem Stromvorgabemodul 107 erzeugt werden, in einer Stromnachführungseinrichtung 106 verarbeitet und liefern ein Brückenansteuersignal. Das Stromvorgabemodul 107 erhält seine Eingangswerte über eine Leitung 113 von einer Drehmomentenvorgabe und wird von der übergeordneten Steuerung 105 gesteuert. Während einer Messung mit Testzyklen aktiviert die übergeordnete Steuerung 105 einen Meßsignalgenerator 108, der dann über eine von der übergeordneten Steuerung 105 bediente Umschaltelogik 110 die Brückenansteuersignale einem Brückenansteuerungsmodul 111 zuführt. In diesem Fall wird das bereits genannte, von der Stromnachführungseinrichtung 106 generierte Brückenansteuersignal unwirksam. Ein Rotorlagerechner 109 berechnet dann, unter Verwendung der vom Stromerfassungsmodul 104 gelieferten Istströme sowie dem vom Meßsignalgenerator 108 gelieferten Wechselrichterschaltzustand, die Rotorlage und leitet diese Information über eine Leitung 112 zur Drehmomentvorgabe sowie zu übergeordneten Reglern weiter.

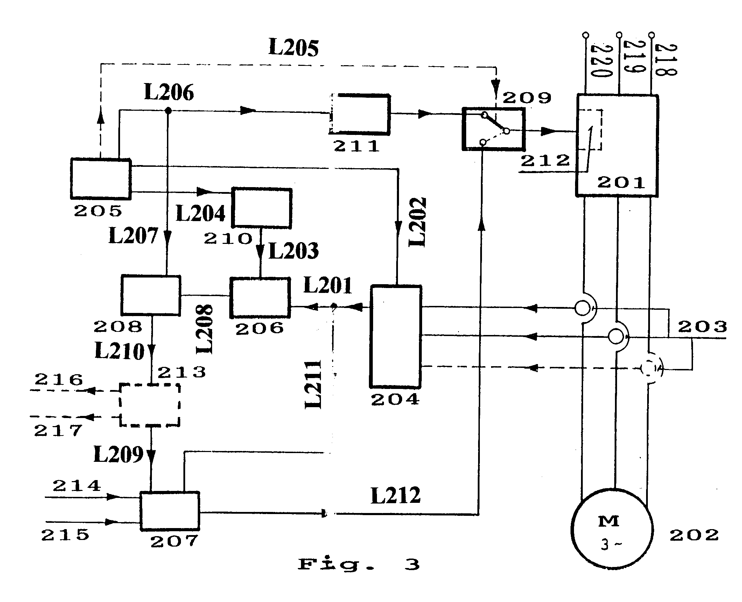

Anhand von Fig. 3 soll das erfindungsgemäße Verfahren, unter Verwendung einer dreisträngigen Reluktanzmaschine, näher erläutert werden. (Dasselbe erfindungsgemäße Prinzip ist für Reluktanzmaschinen mit anderen Strangzahlen in gleicher Weise anwendbar.)

Fig. 3 zeigt die drei Adern 218, 219, 220 einer Drehstromleitung, die einem Spannungszwischenkreisumrichter 201 zugeführt sind, welcher eine Reluktanzmaschine 2 speist. In den Zuleitungen zwischen Spannungszwischenkreisumrichter 201 und Reluktanzmaschine 202 sind Strommeßeinrichtungen 203 vorgesehen. Die Strömeßeinrichtungen 203 liefern mit einem Stromerfassungsmodul 204, unter Einbeziehung einer übergeordneten Steuerung 205, welche das Timing übernimmt, den aktuellen Stromraumzeiger. Aus diesem wird, unter Verwendung einer Timer-Einheit 210, in einem Stromanstiegsrechner 206 der Stromänderungsraumzeiger ermittelt. Dieser wird gemeinsam mit der Spannungsraumzeigerrichtungsinformation, die von der übergeordneten Steuerung 205 generiert wird, in einem Rotorlagerechner 208 zur Berechnung des Rotorlagewinkels herangezogen, welcher in einem Feldorientierungs- und Stromregelungsblock 207, der die Eingänge "Sollmoment" und "Sollmagnetisierung" aufweist, zur Ermittlung des Umrichteransteuerzustandes verwendet wird.

Weiters kann der vom Rotorlagerechner 208 ermittelte Rotorlagewinkel in überlagerte Regelkreise (etwa Drehzahlund Drehmomentregelkreise) eingebunden werden. Die übergeordnete Steuerung 205 entscheidet, ob die Umrichteransteuerung im Falle der Durchführung des erfindungsgemäßen Rotorlagewinkel-Bestimmungsalgorithmusses in einer Umschaltelogik 209 von einem Spannungsraumzeiger-Bildner 211 oder, im normalen Stromregelfall, vom Feldorientierungs- und Stromregelungs-Modul 207 bewerkstelligt wird.

Alternativ werden, bei Verwendung der betriebsmäßig auftretenden Umrichterschalterstellung als Meßsignalgenerierung, der Umschalter 209 und der SpannungsraumzeigerBildner 211 durch eine Rückmeldeschaltung ersetzt, die den tatsächlichen Ansteuerzustand an den Rotorlagerechner 208 übergibt, wobei der Ausgang des Feldorientierungs- und Stromregelungs-Moduls 207 ständig als Eingang des Ansteuerungsmoduls 212 dient.

Da die Summe der der Reluktanzmaschine zugeführten Ströme Null sein muß, kann eine Strommeßeinrichtung 203 eingespart werden.

**Patentansprüche**

1. Verfahren zur Bestimmung maschinenbezogener elektromagnetischer und mechanischer Zustandsgrößen an über Umrichter (1, 101, 201) gespeisten elektrodynamischen Drehfeldmaschinen wie Asynchronmaschinen (2), Synchronmaschinen (102) und Reluktanzmaschinen (202), wobei bei der Synchronmaschine (102) die Rückwirkung von an die Synchronmaschine (102) abgesetzten elektrischen Meßsignalen gemessen wird, und wobei die Meßsignale vom Umrichter selbst generierte Spannungssprünge sind, die Stromänderungen bewirken, welche gemessen und einem Rechner zugeführt werden, der eine komplexe Kenngröße ermittelt und aus der Winkelabhängigkeit der Statorreaktanz die Rotorstellung berechnet, und wobei zum Start der Synchronmaschine (102) eine Vormagnetisierung eingestellt wird, **dadurch gekennzeichnet**, daß bei der Drehfeldmaschine in ihrer Ausbildung als Asynchronmaschine (2), zur Magnetflußbestimmung und zur dynamisch hochwertigen Momentenaufbringung, vor Beginn der Messung aufmagnetisiert wird, und daß die Rückwirkung von an die Asynchronmaschine (2) abgesetzten Meßsignalen gemessen wird, wobei die Meßsignale vom Umrichter (1) generierte Spannungssprünge sind, die Stromänderungen bewirken, welche gemessen und einem Rechner zugeführt werden, der eine komplexe Kenngröße ermittelt, welche dem Quotienten aus Statorspannungsraumzeiger und zeitlicher Änderung des Statorstromraumzeigers proportional ist, wobei die Richtung des Spannungsraumzeigers aus dem bekannten Umrichter-Ansteuerzustand hervorgeht, im folgenden als komplexe Kenngröße bezeichnet, und den magnetischen Fluß berechnet, wobei die komplexe Kenngröße sowohl in ihrem Realteil als auch in ihrem Imaginärteil mit dem doppelten Wert des magnetischen Flußwinkels näherungsweise sinusförmig schwankt und aus Real- und Imaginärteil den doppelten Wert des gesuchten magnetischen Flußwinkels nach bekannten Methoden der komplexen Rechnung ermittelt.

2. Verfahren nach Anspruch 1, **dadurch gekennzeichnet**, daß die vom Umrichter (1) generierten Meßsignale entweder eigens erzeugte oder betriebsmäßig auftretende Spannungssprünge sind, soferne die betriebsmäßig auftretenden Signale aufgrund der erfindungsgemäßen Auswertealgorithmen geeignet sind, und daß die vom Rechner ermittelte komplexe Kenngröße dem Quotienten aus Statorspannungsraumzeiger und zeitlicher Änderung des Statorstromraumzeigers verkehrtproportional ist.

3. Verfahren nach Anspruch 1 und 2, **dadurch gekennzeichnet**, daß der in Anspruch 1 beschriebene Verfahrensschritt mit geänderter Spannungsraumzeigerrichtung, in der vorzugsweise strangzahlgleichen Anzahl, wiederholt wird und für jede Meßrichtung die örtliche komplexe Kenngröße ermittelt wird und daraus unter der idealisierten Annahme einer sinusförmigen Schwankung von Betrag und Phase der komplexen differentiellen Streuinduktivität, wobei deren Betrag seine Extremwerte in der Magnetisierungsachse und elektrisch 90 Grad darauf und deren Argument an diesen Stellen ihre Nulldurchgänge und bei Winkeln von elektrisch 45° + k.90° ihre Extrema aufweist, unter Verwendung von Realteilen allein, Imaginärteilen allein oder einer Kombination von beiden, vorzugsweise so, daß im statistischen Mittel die Abweichung zwischen dem tatsächlichen Wert der Flußachse und dem durch obige Testmessungen ermittelten Wert minimal wird und dann, unter Verwendung der bekannten Methoden der komplexen Rechnung, der doppelte Wert des gesuchten magnetischen Flußwinkels ermittelt wird.

4. Verfahren nach Anspruch 1 und 2, **dadurch gekennzeichnet**, daß die Bestimmung des elektrischen Flußwinkels durch Subtraktion von zwei Stromanstiegsmessungen, bei denen in beiden Teilmessungen der gleiche Spannungsraumzeiger anliegt, wobei die Statorstromraumzeiger, die im Mittel während der beiden Teilmessungen anliegen, so verschieden sein müssen, daß sich die Streuinduktivität aufgrund der unterschiedlichen Statorströme dabei merkbar unterscheidet, wodurch dann die gemessene Differenz der beiden Stromraumzeiger-Änderungsgeschwindigkeiten ein komplexer Zeiger ist, dessen Real- und Imaginärteil mit Flußraumzeiger-Umlaufgeschwindigkeit oszillieren, so daß das Argument dieses komplexen Zeigers mit der elektrischen Lage der Flußachse in eindeutigem Zusammenhang steht, ermittelt wird.

5. Verfahren nach Anspruch 2, 3 und 4, **dadurch gekennzeichnet,** daß eine Kombination von mehreren, vorzugsweise der Strangzahl entsprechenden, Messungen erfolgt, wobei diese in verschiedenen Raumzeigerrichtungen durchgeführt werden, und daß entweder nur die Realteile der komplexen Zeiger, oder nur die Imaginärteile, vorzugsweise entsprechend der üblichen Raumzeigerdefinition, zu neuen komplexen Kenngrößen zusammengefaßt werden, oder beide Auswertungen, also jene der Realteile und jene der Imaginärteile, kombiniert werden und zwar vorzugsweise so, daß die statistischen Eigenschaften des Fehlers der auf diese Weise ermittelten Flußachse minimiert werden.

6. Verfahren nach einem der Ansprüche 1 bis 5, **durch gekennzeichnet,** daß zwei Messungen durchgeführt werden, wobei der Spannungsraumzeiger der zweiten Messung entweder entgegengesetzt dem Spannungsraumzeiger der ersten Messung oder der Nullspannungsraumzeiger ist, und daß die Differenz der in diesen Messungen verwendeten Spannungsraumzeiger einerseits und die Differenz der aus diesen Messungen ermittelten zeitlichen Änderungen der Stromraumzeiger anderseits gebildet werden und diese Raumzeigergrößen an die Stelle der entsprechenden Raumzeigergrößen bei Einzelmessungen treten.

7. Verfahren nach einem der Ansprüche 1 bis 5, **durch gekennzeichnet,** daß zwei Messungen durchgeführt werden, wobei der Spannungsraumzeiger der zweiten Messung ein beliebiger Spannungsraumzeiger ist, der ungleich dem der ersten Messung ist, und daß dieser Spannungsraumzeiger auch der Nullspannungsraumzeiger sein kann, und daß die Differenz der in diesen Messungen verwendeten Spannungsraumzeiger einerseits und die Differenz der aus diesen Messungen ermittelten zeitlichen Änderungen der Stromraumzeiger anderseits gebildet werden und diese Raumzeigergrößen an die Stelle der entsprechenden Raumzeigergrößen bei Einzelmessungen treten.

8. Verfahren nach einem der Ansprüche 1 bis 5, **durch gekennzeichnet,** daß die EMK bei drehender Asynchronmaschine aus momentanen Schätzwerten von magnetischem Fluß sowie dessen zeitlicher Ableitung berechnet und deren Einfluß auf das Meßergebnis kompensiert wird.

9. Verfahren nach einem der Ansprüche 1 bis 5, **durch gekennzeichnet,** daß zwei innerhalb eines ausreichend kurzen Zeitintervalles durchgeführte Messungspaare kombiniert werden, soferne die Spannungsdifferenzraumzeiger der beiden Messungspaare unterschiedliche Argumente aufweisen, indem von jedem Messungspaar die komplexe Kenngröße gebildet und sodann die Differenz dieser beiden komplexen Kenngrößen gebildet wird, die die Eigenschaft hat, daß sie, sowohl in ihrem Real- als auch in ihrem Imaginärteil näherungsweise sinusförmig mit dem doppelten Flußwinkel schwankt und sowohl in ihrem Imaginär- als auch in ihrem Realteil offsetfrei ist.

10. Verfahren nach einem der Ansprüche 1 bis 6, dadurch gekennzeichnet, daß das Meßinterval so definiert ist, daß Meßbeginn und Meßende festgelegt sind und die dazugehörigen Stromwerte gemessen werden.

11. Verfahren nach einem der Ansprüche 1 bis 6, durch **gekennzeichnet,** daß die Stromwerte zu Meßbeginn und zu Meßende festgelegt sind und die Meßzeiten gemessen werden.

12. Verfahren nach einem der Ansprüche 1 bis oder 11, **dadurch gekennzeichnet,** daß die Lage des Meßintervalles so gewählt wird, daß Stromanstiegs- und -abfallmessungen symmetrisch zum Stromarbeitspunkt liegen, wobei die Stromanstiegs- und -abfallmessungen in zwei Teile zerlegbar sind.

13. Verfahren nach einem der Ansprüche 1 bis 12, **dadurch gekennzeichnet,** daß die Messung nach Abklingen der durch die Schalthandlungen ausgelösten Einschwingvorgänge der elektromagnetischen Größen gestartet wird.

14. Verfahren nach einem der Ansprüche 1 bis 13, **dadurch gekennzeichnet,** daß die Feststellung des Vorzeichens des magnetischen Flusses dadurch erfolgt, daß der magnetische Arbeitspunkt in der nach obigen Methoden festgestellten Flußachse verschoben wird, indem näherungsweise ein Stromraumzeiger eingeprägt wird und sofort - wie oben geschildert - die komplexe Kenngröße bestimmt und ihr Betrag berechnet, sodann einen Stromraumzeiger in die Gegenrichtung zum zuvor eingeprägten Stromraumzeiger eingeprägt und wiederum der Betrag berechnet wird, und dann aus der Tatsache, daß die Magnetisierungsrichtung mit dem Minimum der zwei zuvor berechneten Beträge übereinstimmt, die mit dem gesuchten Flußwinkel übereinstimmende Magnetisierungsrichtung festliegt.

15. Verfahren nach einem der Ansprüche 1 bis 14, **dadurch gekennzeichnet,** daß die bei der Bildung der komplexen Kennwerte auftretenden spannungs-, strom-, drehzahl- und flußbetragsabhängigen Offsets in Real- bzw. Imaginärteil durch Korrekturwerte berücksichtigt bzw. eliminiert werden, wobei die Korrekturwerte entweder aus Tabellen entnommen werden oder durch einfache, vorzugsweise lineare, Korrekturfunktionen ermittelt werden, oder, bei Überschreitung eines gewissen Wertes der Drehzahl, durch direkte Echtzeitbestimmung aus den Real- bzw.

Imaginärteilen über Tiefpässe bestimmt werden.

16. Verfahren nach einem der Ansprüche 1 bis 15, **dadurch gekennzeichnet,** daß die Berücksichtigung des Einflusses des Ankerstromes auf die ermittelte Flußrichtung durch einen Korrekturwert erfolgt, welcher entweder aus Tabellen entnommen oder mittels einfacher, vorzugsweise linearer, Korrekturfunktionen berechnet wird.

17. Verfahren nach einem der Ansprüche 1 bis 16, **dadurch gekennzeichnet,** daß die gewonnene Flußinformation mit dem bekannten "Spannungsmodell" für Asynchronmaschinen kombiniert wird und in Drehzahlbereichen, in denen das Spannungsmodell durch die offene Integration der Statorspannung unzuverlässig arbeitet, fallweise Messungen nach obigen Ansprüchen eingebaut werden, welche dann als Adaption bzw. Korrektur des durch das Spannungsmodell ermittelten Flusses dienen.

18. Verfahren nach einem der Ansprüche 1 bis 17, **dadurch gekennzeichnet,** daß die Flußinformation dazu benutzt wird, in die Richtung des ermittelten Flusses die gewünschte flußbildende Stromkomponente einzuprägen und damit die Magnetisierung der Maschine festzulegen und normal dazu die gewünschte drehmomentbildende Stromkomponente einzuprägen und damit das von der Maschine zu entwickelnde Drehmoment festzulegen.

19. Verfahren nach einem der Ansprüche 1 bis 18, **dadurch gekennzeichnet,** daß die Flußinformation durch Kombination mit einem Zustandsmodell der Asynchronmaschine verbessert wird, indem vorzugsweise die Drehzahl, der Flußwinkel und das Lastmoment als Zustandsgrößen, sowie die ermittelte Flußachse als Meßgröße definiert wird und über eine nach den bekannten Methoden der Regelungstechnik zu dimensionierende Rückführung der Abweichung zwischen Zustandsgröße Flußwinkel und Meßgröße Flußachse auf die geschätzten Zustandsgrößen in genauigkeitserhöhender Weise eingegriffen wird.

20. Verfahren nach mindestens einem der Ansprüche 1 bis 19, **dadurch gekennzeichnet,** daß die Drehfeldgeschwindigkeit durch Addition von zwei korrespondierenden Teilmessungen ermittelt wird, wobei diese Teilmessungen mit komplementärer Umrichterschalterstellung verwendet werden, so daß bei der Addition die Umrichterspannung eliminiert wird, und daß aufgrund des Raumzeigers der Stromänderungssumme unmittelbar das Produkt aus Drehfeldgeschwindigkeit und Flußverkettungsraumzeiger folgt und damit aus dem Argument dieses komplexen Ausdruckes die Richtung des Flußraumzeigers, und aus dem Betrag die Drehfeldgeschwindigkeit folgt.

21. Verfahren nach mindestens einem der Ansprüche 1 bis 19, **dadurch gekennzeichnet,** daß die Drehfeldgeschwindigkeit und der Flußraumzeiger durch Subtraktion von zwei Teilmessungen, wobei die zwei gemessenen Stromänderungsraumzeiger mit je einem komplexen Dreher multipliziert werden, deren Argumentdifferenz dem Differenzwinkel zwischen den beiden Spannungsraumzeigern der beiden Teilmessungen gleich ist, und deren Beträge gleich und vorzugsweise 1 sind, wobei ein komplexer Dreher auch das Argument Null aufweisen kann, so daß eine komplexe Multiplikation eingespart werden kann, so daß aufgrund des Raumzeigers des Ergebnisses der Subtraktion unmittelbar das Produkt aus Drehfeldgeschwindigkeit und Flußverkettungsraumzeiger folgt und damit aus dem Argument dieses komplexen Ausdruckes die Richtung des Flußraumzeigers, und aus dem Betrag das Produkt aus Drehfeldgeschwin- digkeit und Flußraumzeigerbetrag folgt.

22. Verfahren nach mindestens einem der Ansprüche 1 bis 20, **dadurch gekennzeichnet,** daß die Drehfeldgeschwindigkeit und der Flußraumzeiger dadurch ermittelt werden, daß der komplexe Stromänderungsraumzeiger zufolge des Nullspannungsraumzeigers gemessen wird, und daß aufgrund des komplexen Stromänderungsraumzeigers unmittelbar das Produkt aus Drehfeldgeschwindigkeit und Flußraumzeiger folgt und damit aus dem Argument dieses komplexen Ausdruckes die Richtung des Flußraumzeigers, und aus dem Betrag das Produkt aus Drehfeldgeschwindigkeit und Flußraumzeigerbetrag folgt.

23. Schaltungsanordnung zur Durchführung eines Verfahrens zur Bestimmung maschinenbezogener elektromagnetischer und mechanischer Zustandsgrößen an über Umrichter (1) gespeisten Asynchronmaschinen (1), **dadurch gekennzeichnet,** daß die Stromistwerte der Stränge der Statorwicklung der Asynchronmaschine (2) von zwischen einem Umrichter (1) und der Asynchronmaschine (2) angeordneten Strommeßeinrichtungen (3) abgenommen und den ersten Eingängen eines Stromerfassungs-Moduls (4) zugeführt sind, und daß das Stromerfassungs-Modul (4) am Ausgang über eine erste Leitung (L1) eine den Stromraumzeiger zu den Abtastzeitpunkten repräsentierende Information liefert, wobei die Abtastzeitpunkte von einer übergeordneten Steuerung (5) über eine digitale, zweite Leitung (L2) definiert sind, wobei die Information von der ersten Leitung (L1) zur Ermittlung des Stromänderungsraumzeigers bzw. ihn repräsentierende Größen in einem Stromanstiegsrechner (6) unter Verwendung eines von einer Timereinheit (10) über eine dritte Leitung (L3) gelieferten Zeitintervalls eingesetzt ist, wobei die Timereinheit (10) von der übergeordneten Steuerung (5) über eine vierte Leitung (L4) gesteuert ist, und daß mit der übergeordneten Steuerung (5) ein Meßablauf, unter Verwendung eines Umrichteransteuerzustands-Bildners (11), gesteuert ist, und daß dabei ein Ansteuerungsmodul (12) des Umrichters (1) durch Umschalten einer Umschaltelogik (9) über eine fünfte Leitung (L5) den Umrichteransteuerzustands-Bildner (11) ansteuert, welcher - von der übergeordneten Steuerung (5) über eine sechste Leitung (L6) gesteuert - Meßsignale erzeugt, und daß den Meßsignalen direkt vom Umrichter (1) an die Asynchronmaschine (2) gelegte Spannungsraumzeiger zugeordnet sind, und diese über die sechste Leitung (L6) vorliegende Spannungsraumzeigerinformation über eine siebente Leitung (L7) gemeinsam mit dem von einer achten Leitung (L8) repräsentierten Stromänderungsraumzeiger zur Ermittlung des Flußwinkels in einem Flußwinkelrechner (8) verwendet ist, welcher über eine zehnte Leitung (L10) in einem dynamischen Asynchronmotor-Modell (13), durch mathematische Nachbildung der Asynchronmaschine (2) nach bekannten Methoden verbessert, an einer neunte Leitung (L9) zur Verfügung steht, wobei mit dem dynamischen Asynchronmotor-Modell (13) auch gleichzeitig die Drehzahl auf eine 15. Leitung (16) und das Lastmoment auf eine 16. Leitung (17) ermittelbar sind, und daß der Flußwinkel in einem Feldorientierungs- und Stromregelungs-Modul (7) zur Berechnung des betriebsmäßigen Umrichter-Ansteuerzustandes gemäß den bekannten Regeln der feldorientierten Regelung aus Sollwerten von Drehmoment über eine 13. Leitung (14) und der Flußbetrag über eine 14. Leitung (15) und unter Verwendung der Iststrom-Information über eine elfte Leitung (L11) verwendet ist, und daß der Umrichter-Ansteuerzustand, über eine zwölfte Leitung (L12) und die Umschaltelogik (9), der betriebsmäßig von der übergeordneten Steuerung (5) an die zwölfte Leitung (L12) gelegt ist, an das Ansteuerungsmodul (12) des Umrichters (1) übertragen ist. Fig. 1

24. Schaltungsanordnung nach Anspruch 23, **dadurch gekennzeichnet,** daß die Verbindung zwischen Flußwinkelrechner (8) und Feldorientierungs- und Stromregelungs-Modul (7) über ein dynamisches Asynchronmotor-Modell (13) geführt ist, und daß die Drehzahl bzw. das Lastmoment von einem ersten bzw. einem zweiten Ausgang des dynamischen Asynchronmotor-Modells (13) über eine erste bzw. eine zweite Leitung (16, 17) einem oder mehreren überlagerten Regelkreisen zugeführt und eingebunden sind.

25. Verfahren nach Oberbegriff zu Anspruch 1, **dadurch gekennzeichnet,** daß bei der Drehfeldmaschine in ihrer Ausbildung als Synchronmaschine (102) die Bestimmung der Rotorposition, mittels der bekannten Methoden der komplexen Rechnung durch Subtraktion von zwei Stromanstiegsmessungen erfolgt, bei denen in beiden Teilmessungen der gleiche Spannungsraumzeiger anliegt, und wobei die Statorstromraumzeiger, die im Mittel während der beiden Teilmessungen anliegen, so verschieden sein müssen, daß sich die Statorinduktivität aufgrund der unterschiedlichen Statorströme dabei merkbar unterscheidet, wodurch dann die gemessene Differenz der beiden Stromraumzeiger-Änderungsgeschwindigkeiten ein komplexer Zeiger ist, dessen Real- und Imaginärteil mit Rotor-Umlaufgeschwindigkeit oszillieren, so daß das Argument dieses komplexen Zeigers mit der elektrischen Lage des Rotors in eindeutigem Zusammenhang steht.

26. Verfahren nach Anspruch 25, **dadurch gekennzeichnet,** daß eine Kombination von mehreren, vorzugsweise der Strangzahl entsprechenden, Messungen dergestalt erfolgt, daß diese in verschiedenen Raumzeigerrichtungen durchgeführt werden und daß entweder nur die Realteile der komplexen Zeiger, oder nur die Imaginärteile, vorzugsweise entsprechend der üblichen Raumzeigerdefinition, zu neuen komplexen Kenngrößen zusammengefaßt werden, welche beide die Eigenschaft haben, daß deren Argumente mit der elektrischen Lage des Rotors korrespondieren oder beide Auswertungen, also jene der Realteile und jene der Imaginärteile, kombiniert werden und zwar vorzugsweise so, daß der statistische Wert des Fehlers der auf diese Weise ermittelten Rotorlage minimiert wird.

27. Verfahren nach Anspruch 25 und 26, **dadurch gekennzeichnet,** daß die in diesen beiden Ansprüchen angeführten Meßvorgänge kombiniert werden, und daß eine Elimination des Einflusses der induzierten Spannung durch Subtraktion von je zwei Messungen erfolgt, wobei der Spannungsraumzeiger der zweiten Messung entweder entgegengesetzt dem Spannungsraumzeiger der ersten Messung oder der Nullspannungsraumzeiger ist, und daß die Differenz der in diesen Messungen verwendeten Spannungsraumzeiger einerseits und die Differenz der aus diesen Messungen ermittelten zeitlichen Änderungen der Stromraumzeiger anderseits gebildet werden und diese Raumzeigergrößen an die Stelle der entsprechenden Raumzeigergrößen bei Einzelmessungen treten.

28. Verfahren nach mindestens einem der Ansprüche 25 bis 27, **dadurch gekennzeichnet,** daß die bei der Bildung der komplexen Kennwerte auftretenden spannungs-, strom-, drehzahl- und flußbetragsabhängigen Offsets in Real- bzw. Imaginärteil durch Korrekturwerte berücksichtigt bzw. eliminiert werden, wobei die Korrekturwerte entweder aus Tabellen entnommen werden oder durch einfache, vorzugsweise lineare, Korrekturfunktionen ermittelt werden, oder, bei Überschreitung eines gewissen Wertes der Drehzahl, durch direkte Echtzeitbestimmung aus den Real- bzw. Imaginärteilen über Tiefpässe bestimmt werden.

29. Verfahren nach mindestens einem der Ansprüche 25 bis 28, **dadurch gekennzeichnet,** daß eine Berücksichtigung des Einflusses des Ankerstromes auf die ermittelte Rotorposition durch einen Korrekturwert erfolgt, welcher entweder aus Tabellen entnommen oder mittels einfacher, vorzugsweise linearer, Korrekturfunktionen berechnet wird.

30. Verfahren nach mindestens einem der Ansprüche 25 bis 29, **dadurch gekennzeichnet,** daß die gewonnene Rotorpositionsinformation mit einem Spannungsmodell für Synchronmaschinen, durch Integration der Statorspannungsgleichung, kombiniert wird und in Drehzahlbereichen, in denen das Spannungsmodell durch die offene Integration der Statorspannung unzuverlässig arbeitet, fallweise Messungen nach obigen Ansprüchen eingebaut werden, welche dann als Adaption bzw. Korrektur der durch das Spannungsmodell ermittelten Rotorposition dienen.

31. Verfahren nach mindestens einem der Ansprüche 25, 26, 28, 29 oder 30, **dadurch gekennzeichnet,** daß die Rotorgeschwindigkeit durch Addition von zwei korrespondierenden Teilmessungen ermittelt wird, wobei diese Teilmessungen mit komplementärer Umrichterschalterstellung verwendet werden, und daß bei der Addition die Umrichterspannung eliminiert wird, und daß aufgrund des Raumzeigers der Stromänderungssumme unmittelbar das Produkt aus Drehfeldgeschwindigkeit und Statorflußverkettungsraumzeiger folgt und damit aus dem Argument dieses komplexen Ausdruckes die Rotorposition, und aus dem Betrag die Rotorgeschwindigkeit folgt.

32. Schaltungsanordnung zur Durchführung eines Verfahrens zur Bestimmung maschinenbezogener elektromagnetischer und mechanischer Zustandsgrößen an über Umrichter (101) gespeisten Synchronmaschinen (102), wobei die zufolge der Spannungssprünge und zur Berechnung der zeitlichen Änderung des Stromraumzeigerbetrages notwendigen Stromänderungen von an zwischen einem Stromrichter (101) und der Synchronmaschine (102) angeordneten Strommeßeinrichtungen (103) abgenommen werden, **dadurch gekennzeichnet,** daß die Istströme vom Ausgang eines Stromerfassungsmoduls (104) jeweils einem ersten Eingang eines Rotorlagerechners (109) und einem ersten Eingang einer Stromnachführungseinrichtung (106) zugeführt sind, und daß die vom Stromerfassungs-Modul (104) erfaßten Istströme über die Strommeßeinrichtungen (103) als analoge Signale 1 - 3 zu Zeitpunkten, die von einem digitalen Steuereingang (5) vorgegeben sind, erfaßt, wobei eine erste Leitung (L 101) die Istströme in Form von Strangströmen oder statorbezogenen Strangstrom-Raumzeigerkomponenten repräsentiert, und daß der Eingang einer vierten Leitung (113) den betriebsmäßigen Sollstromwert von einer übergeordneten Drehzahl- oder Drehmoment-Steuerung bzw. -Regelung darstellt, und daß ein digitales Steuersignal von einer übergeordneten Steuerung (105) über eine fünfte Leitung (L105) ein Stromvorgabemodul (107) darüber informiert, wann ein Meßvorgang abläuft und der betriebsmäßige Sollstromwert (vierte Leitung 113) außer Kraft ist, und daß neunte Leitungen (L109) die Sollströme repräsentieren, die in der Stromnachführungseinrichtung (106) mit den Istwerten verglichen werden, und daß aus der Differenz mittels eines Stromreglers eine 3 bit-Umrichter-Ansteuerinformation erzeugt und über eine von der übergeordneten Steuerung (105) gesteuerte Umschaltelogik (110) über eine dritte Leitung (L103) an ein Brückenansteuerungsmodul (111) gelegt ist, und daß die übergeordnete Steuerung (105) Strommeßbefehle (zweite Leitung L102) generiert, und daß ein Meßsignalgenerator (108) veranlaßt ist, über den digitalen Befehl (sechste Leitung L106) die Meßsignale vom Umrichter (101) zu generieren, wobei mit den digitalen Signalen auf einer siebenten Leitung (L107) die meßsignalkonforme Umrichtersteuerinformation über die von der übergeordneten Steuerung (105) gesteuerte Umschaltelogik (110) an das Brückenansteuerungsmodul (111) über dritte Leitungen (L103) gelegt ist, und daß der Rotorlagerechner (109) aus der Umrichter-Ansteuerinformation (achte Leitung L108), die den Spannungsraumzeiger repräsentiert, und den zeitlichen Verläufen der Istströme (erste Leitungen L 101), die aktuelle Rotorlage (zehnte Leitung 112) berechnet. Fig. 2

33. Verfahren nach dem Oberbegriff zu Anspruch 1, **dadurch gekennzeichnet,** daß bei der Drehfeldmaschine in ihrer Ausbildung als Reluktanzmaschine (202) die Rückwirkung von an die Reluktanzmaschine (202) abgesetzten Meßsignalen gemessen wird, wobei die Meßsignale vom Umrichter (201) generierte Spannungssprünge sind, die entweder zusätzlich eingefügte oder betrieblich auftretende, zur Auswertung geeignete, Signale sind, die Stromänderungen bewirken, welche gemessen und einem Rechner zugeführt werden, der eine komplexe Kenngröße ermittelt, welche dem Quotienten aus Statorspannungsraumzeiger und zeitlicher Änderung des Statorstromraumzeigers proportional oder umgekehrt proportional ist, im folgenden als komplexe Kenngröße bezeichnet, wobei die Richtung des Spannungsraumzeigers aus dem bekannten Umrichter-Ansteuerzustand hervorgeht, und die Rotorlage berechnet, wobei die komplexe Kenngröße aufgrund der unterschiedlichen Reaktanzen in Längs- und Querrichtung sowohl in ihrem Realteil als auch in ihrem Imaginärteil mit dem doppelten Wert der Rotorlage näherungsweise sinusförmig schwankt und aus Real- und Imaginärteil den doppelten Wert des gesuchten Rotorlagewinkels nach bekannten Methoden der komplexen Rechnung ermittelt.

34. Verfahren nach Anspruch 33, **dadurch gekennzeichnet,** daß der in Anspruch 33 beschriebene Verfahrensschritt mit geänderter Spannungsraumzeigerrichtung wiederholt wird und für jede Meßrichtung die örtliche komplexe Kenngröße ermittelt wird und daraus unter der idealisierten Annahme einer sinusförmigen Schwankung von Real- und Imaginärteil der komplexen Kenngröße, wobei deren Realteil die Extremwerte in der Magnetisierungsachse und elektrisch 90 Grad darauf und deren Imaginärteil an diesen Stellen ihre Nulldurchgänge und bei Winkeln von elektrisch 45 °+ k .90° ihre Extrema aufweisen, unter Verwendung von Realteilen allein, Imaginärteilen allein oder einer Kombination von beiden, vorzugsweise so, daß im statistischen Mittel die Abweichung zwischen dem tatsächlichen Wert der Rotorlage und dem durch obige Testmessungen ermittelten Wert minimal wird und dann, unter Verwendung der bekannten Methoden der komplexen Rechnung, der doppelte Wert des gesuchten Rotorlagewinkels ermittelt wird.

35. Verfahren nach Anspruch 34, **dadurch gekennzeichnet,** daß eine Kombination von mehreren, vorzugsweise der Strangzahl entsprechenden, Messungen erfolgt, wobei diese in verschiedenen Raumzeigerrichtungen durchgeführt werden, und daß entweder nur die Realteile der komplexen Zeiger, oder nur die Imaginärteile, vorzugsweise entsprechend der üblichen Raumzeigerdefinition, zu neuen komplexen Kenngrößen zusammengefaßt werden, oder beide Auswertungen, also jene der Realteile und jene der Imaginärteile, kombiniert werden und zwar vorzugsweise so, daß die statistischen Eigenschaften des Fehlers der auf diese Weise ermittelten Rotorlage minimiert werden.

36. Verfahren nach einem der Ansprüche 33 bis 35, **dadurch gekennzeichnet,** daß zwei Messungen durchgeführt werden, wobei der Spannungsraumzeiger der zweiten Messung ungleich dem Spannungsraumzeiger der ersten Messung ist, und wobei auch der Nullspannungsraum- zeiger nicht ausgeschlossen ist, und daß die Differenz der in diesen Messungen verwendeten Spannungsraumzeiger einerseits und die Differenz der aus diesen Messungen ermittelten zeitlichen Änderungen der Stromraumzeiger anderseits gebildet werden und diese Raumzeigergrößen an die Stelle der entsprechenden Raumzeigergrößen bei Einzelmessungen treten.

37. Verfahren nach mindestens einem der Ansprüche 33 bis 36, **dadurch gekennzeichnet,** daß zwei innerhalb eines ausreichend kurzen Zeitintervalles durchgeführte Messungspaare kombiniert werden, soferne die Spannungsdifferenzraumzeiger der beiden Messungspaare unterschiedliche Argumente aufweisen, indem die Spannungsdifferenzraumzeiger einerseits und die Stromanstiegsdifferenzraumzeiger anderseits subtrahiert werden und mit diesen Differenzen die kom- plexe Kenngröße gebildet wird, die die Eigenschaft hat, daß sie, sowohl in ihrem Real- als auch in ihrem Imaginärteil näherungsweise sinusförmig mit dem doppelten Rotorlagewinkel schwankt und gegenüber der unter Verwendung von Spannungs- und Stromanstiegsraumzeigern gebildeten komplexen Kenngröße, sowohl in ihrem Imaginär- als auch in ihrem Realteil offsetfrei ist.

38. Verfahren nach einem der Ansprüche 33 bis 37, **dadurch gekennzeichnet,** daß zwei innerhalb eines ausreichend kurzen Zeitintervalles durchgeführte Messungspaare kombiniert werden, soferne die Spannungsdifferenzraumzeiger der beiden Messungspaare unterschiedliche Argumente aufweisen, indem von jedem Messungspaar die komplexe Kenngröße gebildet und sodann die Differenz dieser beiden komplexen Kenngrößen gebildet wird, die die Eigenschaft hat, daß sie, sowohl in ihrem Real- als auch in ihrem Imaginärteil näherungsweise sinusförmig mit dem doppelten Flußwinkel schwankt und sowohl in ihrem Imaginär- als auch in ihrem Realteil offsetfrei ist.

39. Verfahren nach einem der Ansprüche 33 bis 36 dadurch gekennzeichnet, daß anstelle der zuvor genannten zweiten Messung diese durch die Rotordrehung verursachte Spannung aus momentanen Schätzwerten von magnetischem Fluß sowie dessen zeitlicher Ableitung berechnet und deren Einfluß auf das Meßergebnis kompensiert wird.

40. Verfahren nach einem der Ansprüche 33 bis 37, dadurch gekennzeichnet, daß das Meßinterval so definiert ist, daß Meßbeginn und Meßende festgelegt sind und die dazugehörigen Stromwerte gemessen werden.

41. Verfahren nach einem der Ansprüche 33 bis 37, dadurch gekennzeichnet, daß die Stromwerte zu Meßbeginn und zu Meßende festgelegt sind und die Meßzeiten gemessen werden.

42. Verfahren nach einem der Ansprüche 33 bis 40, dadurch gekennzeichnet, daß die Lage des Meßintervalles so gewählt wird, daß Stromanstiegs- und -abfallmessungen symmetrisch zum Stromarbeitspunkt liegen, wobei die Stromanstiegs- und -abfallmessungen in zwei Teile zerlegbar sind.

43. Verfahren nach einem der Ansprüche 33 bis 41, dadurch gekennzeichnet, daß die Messung nach Abklingen der durch die Schalthandlungen ausgelösten Einschwingvorgänge der elektromagnetischen Größen gestartet wird.

44. Verfahren nach einem der Ansprüche 33 bis 42 dadurch gekennzeichnet, daß die bei der Bildung der komplexen Kennwerte auftretenden spannungs-, strom-, drehzahl- und flußbetragsabhängigen Offsets in Real- bzw. Imaginärteil durch Korrekturwerte berücksichtigt bzw. eliminiert werden, wobei die Korrekturwerte entweder aus Tabellen entnommen werden oder durch einfache, vorzugsweise lineare, Korrekturfunktionen ermittelt werden, oder, bei Überschreitung eines gewissen Wertes der Drehzahl, durch direkte Echtzeitbestimmung aus den Real- bzw. Imaginärteilen über Tiefpässe bestimmt werden.

45. Verfahren nach einem der Ansprüche 33 bis 43, dadurch gekennzeichnet, daß die gewonnene Rotorlageinformation mit dem "Spannungsmodell" für Reluktanzmaschinen, wobei der Statorflußraumzeiger durch Integration des Klemmenspannungsraumzeigers abzüglich der Spannungsabfälle am Statorwiderstand ermittelt und daraus aufgrund der Kenntnis des Statorstromraumzeigers und der Induktivitäten in Längs- und Querrichtung die Rotorlage berechnet wird, kombiniert wird und in Drehzahlbereichen, in denen das Spannungsmodell durch die offene Integration der Statorspannung unzuverlässig arbeitet, fallweise Messungen nach obigen Ansprüchen eingebaut werden, welche dann als Adaption bzw. Korrektur des durch das Spannungsmodell ermittelten Flusses dienen.

46. Verfahren nach einem der Ansprüche 33 bis 43, dadurch gekennzeichnet, daß die Rotorlageinformation dazu benutzt wird, in die Richtung der Längsache die gewünschte flußbildende Stromkomponente einzuprägen und damit die Magnetisierung der Maschine festzulegen und normal dazu die zur Erzielung des geforderten Drehmomentes notwendige Querstromkomponente einzuprägen und damit das von der Maschine zu entwickelnde Drehmoment festzulegen.

47. Verfahren nach einem der Ansprüche 33 bis 44, dadurch gekennzeichnet, daß die Flußinformation durch Kombination mit einem Zustandsmodell der Reluktanzmaschine verbessert wird, indem vorzugsweise die Drehzahl, die Rotorlage und das Lastmoment als Zustandsgrößen, sowie der ermittelte Rotorlagewinkel als Meßgröße definiert wird und über eine nach den bekannten Methoden der Regelungstechnik zu dimensionierende Rückführung der Abweichung zwischen Zustandsgröße Rotorlage und Meßgröße Rotorlagewinkel auf die geschätzten Zustandsgrößen in genauigkeitserhöhender Weise eingegriffen wird.

48. Verfahren nach mindestens einem der der Ansprüche 33 bis 45, dadurch gekennzeichnet, daß durch Subtraktion von zwei Teilmessungen, wobei die zwei gemessenen Stromänderungsraumzeiger mit je einem komplexen Dreher multipliziert werden, deren Argumentdifferenz dem Differenzwinkel zwischen den beiden Spannungsraumzeigern der beiden Teilmessungen gleich ist, und deren Beträge gleich und vorzugsweise 1 sind, wobei ein komplexer Dreher auch das Argument Null aufweisen kann, so daß eine komplexe Multiplikation eingespart werden kann, so daß bei der Subtraktion die Umrichterspannung eliminiert wird, oder alternativ durch eine Messung, wobei diese Messung bei der Umrichterschalterstellung "Null" durchgeführt wird, die Rotordrehfeldgeschwindigkeit und/oder der Rotorlagewinkel ermittelt wird.

49. Verfahren nach mindestens einem der Ansprüche 33 bis 48, dadurch gekennzeichnet, daß bei Maschinen mit Rotoren mit magnetfelderregenden Elementen, wie eine Spule oder ein Permanentmagnet, der Einfluß dieser Elemente durch die Messung von durch sie in den entsprechenden Achsrichtungen enstehenden äquivalenten Strömen berücksichtigt wird.

50. Verfahren nach mindestens einem der Ansprüche 33 bis 49, dadurch gekennzeichnet, daß bei Maschinen, deren Rotor auch einen Dämpferkäfig, im folgenden als Dämpfer bezeichnet, trägt oder aus elektrisch in gewissem Maße leitfähigem Material besteht, das wie ein Dämpfer wirkt, wodurch die Stromänderung im Stator aufgrund des Dämpfers über die Streupfade bestimmt wird, solange im Dämpfer Ströme fließen und durch unterschiedliche magnetische Eigenschaften der Streuwege relativ zur Flußachse bzw. zur Rotorlage, wieder die Flußachse detektiert wird.

51. Verfahren nach Anspruch 50, dadurch gekennzeichnet, daß bei entsprechend kurzer Dämpferzeitkonstante nach einer Schalthandlung abgewartet wird, bis die Dämpfer- bzw. Wirbelströme abgeklungen sind und sodann die Messungen durchgeführt werden.

52. Schaltungsanordnung zur Durchführung eines Verfahrens zur Bestimmung maschinenbezogener elektromagnetischer und mechanischer Zustandsgrößen an über Umrichter (201) gespeisten Reluktanzmaschinen (202), **dadurch gekennzeichnet**, daß die Stromistwerte der Stränge der Statorwicklung der Reluktanzmaschine (202) von zwischen dem Umrichter (201) und der Reluktanzmaschine (202) angeordneten Strommeßeinrichtungen (203) abgenommen und den ersten Eingängen eines Stromerfassungsmoduls (204) zugeführt sind, welches am Ausgang über eine erste Leitung (L201) 1) eine den Stromraumzeiger zu den Abtastzeitpunkten repräsentierende, im allgemeinen digitalisierte, Information (entweder Phasenströme oder statorbezogene Komponenten des Stromraumzeigers) liefert, wobei die Abtastzeitpunkte von einer übergeordneten Steuerung (205) über eine zweite, digitale Leitung (L202) definiert sind, und wobei die Information von der ersten Leitung (L201) zur Ermittlung des Stromänderungsraumzeigers bzw. ihn repräsentierende Größen in einem Stromanstiegsrechner (206) unter Verwendung eines von einer Timereinheit (210) über eine dritte Leitung (L203) gelieferten Zeitintervalles verwendet wird, wobei die Timereinheit (210) von der übergeordneten Steuerung (205) über eine vierte Leitung (L204) gesteuert ist, und daß mit der übergeordneten Steuerung (205) ein Meßablauf, unter Verwendung eines Umrichteransteuerzustands-Bildners (211) gesteuert ist und dabei ein Ansteuerungsmodul (212) des Umrichters (201) durch Umschalten einer Umschaltelogik (209) über eine fünfte Leitung (L 105) mit dem Umrichteransteuerzustands-Bildner (211) verbunden ist, welcher - von der übergeordneten Steuerung (205) über eine sechste Leitung (L206) gesteuert - Meßsignale erzeugt, welchen direkt vom Umrichter (201) an die Asynchronmaschine (202) gelegte Spannungsraumzeiger zugeordnet sind, und daß diese über die sechste Leitung (L206) vorliegende Spannungsraumzeigerinformation über eine siebente Leitung (L207) gemeinsam mit dem von einer achten Leitung (L208) repräsentierten Stromänderungsraumzeiger zur Ermittlung des Flußwinkels in einem Flußwinkelrechner (208) verwendet wird, welcher über eine zehnte Leitung (L210) in einem dynamischen Reluktanzmotor-Modell (213), durch mathematische Nachbildung der Reluktanzmaschine nach bekannten Methoden verbessert, an eine neunte Leitung (L209) zur Verfügung steht, wobei mit dem dynamischen Reluktanzmotor-Modell (213) auch gleichzeitig die Drehzahl auf einer 13. Leitung(216) und das Lastmoment auf einer 14. Leitung (217) ermittelbar sind, und daß der Flußwinkel dann im Stromregelungs-Modul (207) zur Berechnung des betriebsmäßigen Umrichter-Ansteuerzustandes gemäß den bekannten Regeln der feldorientierten Regelung aus Sollwerten von Drehmoment über eine 15. Leitung (214) und der Flußbetrag über eine 16. Leitung (215) und unter Verwendung der Iststrom-Information über eine elfte Leitung (L211) herangezogen wird, und daß der Umrichter-Ansteuerzustand über eine zwölfte Leitung (L212) und die Umschaltelogik (209), der betriebsmäßig von der übergeordneten Steuerung (205) an die zwölfte Leitung (L212) gelegt ist, an das Ansteuerungsmodul (212) des Umrichters (201) übertragen wird. Fig. 3

53. Schaltungsanordnung nach Anspruch 52, **dadurch gekennzeichnet**, daß die Verbindung zwischen Rotorlagerechner (208) und Feldorientierungs- und Stromregelungs-Modul (207) über ein dynamisches Reluktanzmotor-Modell (213) geführt ist, und daß die Drehzahl bzw. das Lastmoment von einem ersten bzw. einem zweiten Ausgang des dynamischen Reluktanzmotor-Modells (213) über eine erste bzw. eine zweite Leitung (216, 217) einem oder mehreren überlagerten Regelkreisen zugeführt und eingebunden sind.

## Claims

1. A process for the determination of machine-specific electromagnetic and mechanical state variables of electrodynamic polyphase machines such as asynchronous machines (2), synchronous machines (102) and reluctance machines (202) fed via converters (1, 101, 201), where in the case of the synchronous machine (102) the effect of electrical measurement signals transmitted to the synchronous machine (102) is measured, and where the measurement signals are voltage jumps which are generated by the converter itself and which effect current changes which are measured and fed to a calculator which calculates a complex characteristic quantity and which calculates the rotor position from the angular dependency of the stator reactance, and where a bias magnetization is set when the synchronous machine (102) is started, characterised in that for the determination of the magnetic flux and for the application of torque at high dynamic values, the polyphase machine, in its embodiment as asynchronous machine (2), is magnetized prior to the start of the measurement, and that the effect of measurement signals transmitted to the asynchronous machine (2) is measured, where the measurement signals are voltage jumps which are generated by the converter (1) and which effect current changes which are measured and fed to a calculator which calculates a complex characteristic quantity which is proportional to the quotient of stator voltage space vector and time change in the stator current space vector, where the direction of the voltage space vector follows from the known converter drive state, referred to in the following as complex characteristic quantity, and which calculates the magnetic flux, where both in its real component and in its imaginary component the complex characteristic quantity fluctuates approximately sinusoidally with double the value of the magnetic flux angle, and from the real and imaginary components calculates, in accordance with known methods of complex calculation, the double value of the magnetic flux angle to be detected.

2. A process as claimed in Claim 1, characterised in that the measurement signals generated by the converter (1) are voltage jumps which are either purposefully generated or occur in operation, provided the signals which occur in operation are suitable on the basis of the analysis algorithms according to the invention, and that the complex characteristic quantity calculated by the calculator is inversely proportional to the quotient of stator voltage space vector and time change of the stator current space vector.

3. A process as claimed in Claim 1 and 2, characterised in that the process step described in Claim 1 is repeated with a different voltage space vector direction, preferably with the same number of phases, and for each measurement direction the local complex characteristic quantity is calculated and [1] with the idealised assumption of a sinusoidal fluctuation in the absolute value and phase of the complex differential stray inductance, where the absolute value of the latter exhibits its extreme values in the magnetization axis and electrically 90° thereto and where the argument of the latter exhibits its zero transitions at these points and its extremes at angles of electrically 45°+k.90°, using real components alone, imaginary components alone or a combination of the two, preferably in such manner that on a statistical average the deviation between the actual value of the flux axis and the value determined by the above test measurements becomes minimal, and then using known methods of complex calculation, double the value of the magnetic flux angle to be detected is calculated.

4. A process as claimed in Claim 1 and 2, characterised in that the electrical flux angle is determined by the subtraction of two current rise-rate measurements, where the same voltage space vector is present in both sub-measurements, where the stator current space vectors, which on average are present during both of the sub-measurements, must differ in such manner that the stray inductance differs noticeably as a result of the different stator currents, with the result that the measured difference between the two current space vector change speeds is then a complex vector whose real and imaginary components oscillate with the flux space vector rotational speed, so that the argument of this complex vector is clearly related to the electrical position of the flux axis.

5. A process as claimed in Claim 2, 3 and 4, characterised in that a plurality of measurements, preferably corresponding to the number of phases, are combined, where these are executed in different space vector directions, and that either only the real components of the complex vectors or only the imaginary components, preferably in accordance with the standard space vector definition, are combined to form new complex characteristic quantities, or both analyses, thus that of the real components and that of the imaginary components, are combined and preferably in such manner that the statistical properties of the error in the flux axis calculated in this way are minimised.

6. A process as claimed in one of Claims 1 to 5, characterised in that two measurements are performed, where the voltage space vector of the second measurement is either opposed to the voltage space vector of the first measurement or is the zero voltage space vector, and that the difference in the voltage space vectors employed in these measurements on the one hand and the difference in the time changes in the current space vectors determined from these measurements on the other hand are formed, and these space vector variables replace the corresponding space vector variables in individual measurements.

7. A process as claimed in one of Claims 1 to 5, characterised in that two measurements are performed, where the voltage space vector of the second measurement is an arbitrary voltage space vector which differs from that of the first measurement, and that this voltage space vector can also be the zero voltage space vector, and that the difference in the voltage space vectors employed in these measurements on the one hand and the difference in the time changes in the current space vectors determined from these measurements on the other hand are formed, and these space vector variables replace the corresponding space vector variables in individual measurements.

8. A process as claimed in one of Claims 1 to 5, characterised in that the EMF of a rotating asynchronous machine is calculated from instantaneous estimated values of the magnetic flux and its time derivative, and its influence on the measurement result is compensated.

9. A process as claimed in one of Claims 1 to 5, characterised in that two pairs of measurements performed within a sufficiently short time interval are combined if the voltage difference space vectors of the two pairs of measurements possess different arguments, in that the complex characteristic quantity of each pair of measurements is formed and then the difference between these two complex characteristic quantities is formed, which has the property that, both in its real component and in its imaginary component, it fluctuates approximately sinusoidally with double the flux angle and is offset-free both in its imaginary component and in its real component.

10. A process as claimed in one of Claims 1 to 6, characterised in that the measurement interval is defined such that the start and the end of the measurement are fixed and the associated current values are measured.

11. A process as claimed in one of Claims 1 to 6, characterised in that the current values are fixed at the start and end of the measurement and the measurement times are measured.

12. A process as claimed in one of Claims 1 to or 11, characterised in that the position of the measurement interval is selected such that current rise-rate and fall-rate measurements are symmetrical to the operating point of the current, where the current rise-rate and fall-rate measurements can be split into two parts.

13. A process as claimed in one of Claims 1 to 12, characterised in that the measurement is started following the decay of the transient responses of the electromagnetic variables triggered by the switching procedures.

14. A process as claimed in one of Claims 1 to 13, characterised in that the sign of the magnetic flux is determined in that the magnetic operating point in the flux axis, determined in accordance with the above methods, is displaced in that by approximation a current space vector is impressed and immediately - as described above - the complex characteristic quantity is determined and its value is calculated, whereupon a current space vector is impressed in the opposite direction to the previously impressed current space vector and again the value is calculated, and then from the fact that the magnetization direction corresponds to the minimum of the two previously calculated values, the magnetization direction corresponding to the flux angle which is to be detected is defined.

15. A process as claimed in one of Claims 1 to 14, characterised in that the voltage-, current-, speed- and flux value-dependent offsets in the real and imaginary components which occur during the formation of the complex characteristic quantities are taken into account or eliminated by means of correction values, where the correction values are either obtained from tables or calculated by simple, preferably linear, correction functions or, when a specific value of the speed is exceeded, are calculated by direct real time determination from the real and imaginary components via low-pass filters.

16. A process as claimed in one of Claims 1 to 15, characterised in that the influence of the armature current on the determined flux direction is taken into account by means of a correction value which is either obtained from tables or calculated by means of simple, preferably linear correction functions.

**17.** A process as claimed in one of Claims 1 to 16, characterised in that the obtained flux information is combined with the known "voltage model" for asynchronous machines and in speed ranges in which the voltage model operates unreliably due to the open integration of the stator voltage, from case to case measurements according to the above claims are incorporated, which then serve for the adaptation and correction of the flux calculated by the voltage model.

**18.** A process as claimed in one of Claims 1 to 17, characterised in that the flux information is used to impress the desired flux-forming current component in the direction of the determined flux and thus to define the magnetization of the machine, and at right angles thereto to impress the desired torque-forming current component and thus to define the torque to be developed by the machine.

**19.** A process as claimed in one of Claims 1 to 18, characterised in that the flux information is improved upon by combination with a state model of the asynchronous machine in that preferably the speed, the flux angle and the load torque are defined as state variables and the determined flux axis is defined as measured variable and via feedback, to be dimensioned in accordance with known methods of regulation technology, of the deviation between state variable, flux angle, and measured variable, flux axis, the estimated state variables are influenced in a manner so as to increase accuracy.

**20.** A process as claimed in at least one of Claims 1 to 19, characterised in that the rotary field speed is determined by the addition of two corresponding sub-measurements, where these sub-measurements are used with a complementary converter switch position so that during the addition the converter voltage is eliminated and that the product of rotary field speed and flux linkage space vector follows directly from the space vector of the current-change sum, and thus the direction of the flux space vector follows from the argument of this complex term and the rotary field speed follows from the absolute value.

**21.** A process as claimed in at least one of Claims 1 to 19, characterised in that the rotary field speed and the flux space vector are determined by the subtraction of two sub-measurements, where the two measured current-change space vectors are in each case multiplied by a complex rotator, the argument difference of which is equal to the difference angle between the two voltage space vectors of the two sub-measurements, and the absolute values of which are equal and preferably 1, where a complex rotator can also possess the argument zero, so that it is possible to spare a complex multiplication, so that the product of rotary field speed and flux linkage space vector follows directly from the space vector of the result of the subtraction, and thus the direction of the flux space vector follows from the argument of this complex term and the product of rotary field speed and flux space vector value follows from the absolute value.

**22.** A process as claimed in at least one of Claims 1 to 20, characterised in that the rotary field speed and the flux space vector are determined in that the complex current-change space vector is measured in accordance with the zero voltage space vector and that the product of rotary field speed and flux space vector follows directly from the complex current-change space vector, and thus the direction of the flux space vector follows from the argument of this complex term and the product of rotary field speed and flux space vector value follows from the absolute value.

**23.** A circuit arrangement for the execution of a process for the determination of machine-specific electromagnetic and mechanical state variables of asynchronous machines (2) fed via converters (1), characterised in that the actual current values of the phases of the stator winding of the asynchronous machine (2) are tapped from current measuring devices (3) arranged between a converter (1) and the asynchronous machine (2) and fed to the first inputs of a current detection module (4), and that at its output the current detection module (4) supplies, via a first line (L1), an item of information representing the current space vector at the sampling times, where the sampling times are defined by a superordinate control unit (5) via a digital, second line (L2), where the information from the first line (L1) is used to determine the current-change space vector, or variables representative of the latter, in a current rise-rate calculator (6) using a time interval supplied via a third line (L3) from a timer unit (10), where the timer unit (10) is controlled by the superordinate control unit (5) via a fourth line (L4), and that the superordinate control unit (5) controls a measurement process employing a converter drive state-forming device (11), and that by the switching-over of a switch-over logic circuit (9), via a fifth line (L5) a drive module (12) of the converter (1) drives the converter drive state-forming device (11) which - controlled by the superordinate control unit (5) via a sixth line (L6) - generates measurement signals, and that the measurement signals are assigned voltage space vectors directly applied from the converter (1) to the asynchronous machine (2) and this voltage space vector information available via the sixth line (L6) is used via a seventh line (L7), together with the current-change space vector represented by an eighth line (L8), to determine the flux angle in a flux angle calculator (8) which, improved upon via a tenth line (L10) in a dynamic asynchronous motor model (13) by mathematical simulation of the asynchronous machine in accordance with known methods, is available on a ninth line (L9), where with the dynamic asynchronous motor model (13) simultaneously the speed on a fifteenth line (16) and the load torque on a sixteenth line (17) can be determined, and that the flux angle is used in a field orientation and current regulating module (7) to calculate the operational converter drive state, in accordance with the known rules of field oriented control, from setpoint values of torque via a thirteenth line (14) and the flux value via a fourteenth line (15) and using the actual current information via an eleventh line (L11), and that the converter drive state is transmitted via a twelfth line (L12) and the switch-over logic circuit (9), which during operation is connected by the superordinate control unit (5) to the twelfth line (L12), to the drive module (12) of the converter (1). Fig. 1

24. A circuit arrangement as claimed in Claim 23, characterised in that the connection between flux angle calculator (8) and field orientation- and current regulating module (7) leads across a dynamic asynchronous motor model (13), and that the speed and load torque from a first and second output respectively of the dynamic asynchronous motor model (13) are supplied and linked to one or more superimposed regulating circuits via a first and second line (16, 17) respectively.

25. A process according to the preamble of Claim 1, characterised in that in the polyphase machine in its embodiment as synchronous machine (102) the rotor position is determined by means of known methods of complex calculation by the subtraction of two current rise-rate measurements, where the same voltage space vector is present in both sub-measurements and where the stator current space vectors, which on average are present during both sub-measurements, must differ in such a way that the stator inductance noticeably differs as a result of the different stator currents, whereby then the measured difference between the two current space vector change speeds is a complex vector, the real and imaginary components of which oscillate at the rotational speed of the rotor, so that the argument of this complex vector is clearly related to the electrical position of the rotor.

26. A process as claimed in Claim 25, characterised in that a plurality of measurements, preferably corresponding to the number of phases, are combined in such manner that these measurements are executed in different space vector directions and that either only the real components of the complex vectors or only the imaginary components, preferably in accordance with the standard space vector definition, are combined to form new complex characteristic quantities, both of which have the property that their arguments correspond to the electrical position of the rotor, or both analyses, thus that of the real components and that of the imaginary components are combined, and preferably in such manner that the statistical value of the error in the rotor position calculated in this way is minimised.

27. A process as claimed in Claim 25 and 26, characterised in that the measurement processes described in these two claims are combined and that the influence of the induced voltage is eliminated by the subtraction of in each case two measurements, where the voltage space vector of the second measurement is either opposed to the voltage space vector of the first measurement or is the zero voltage space vector, and that the difference between the voltage space vectors employed in these measurements on the one hand and the difference between the time changes of the current space vector determined from these measurements on the other hand are formed, and these space vector variables replace the corresponding space vector variables in individual measurements.

28. A process as claimed in at least one of Claims 25 to 27, characterised in that the voltage-, current-, speed- and flux value- dependent offsets in the real and imaginary components which occur during the formation of the complex characteristic quantities are taken into consideration or eliminated by means of correction values, where the correction values are either obtained from tables or are calculated by simple, preferably linear correction functions, or on the overshooting of a specified value of the speed are calculated by direct real time determination from the real and imaginary components via low-pass filters.

29. A process as claimed in at least one of Claims 25 to 28, characterised in that the influence of the armature current on the calculated rotor position is taken into consideration by means of a correction value which either is obtained from tables or is calculated by means of simple, preferably linear correction functions.

30. A process as claimed in at least one of Claims 25 to 29, characterised in that the obtained rotor position information is combined with a voltage model for synchronous machines by integration of the stator voltage equation, and in speed ranges in which the voltage model operates unreliably due to the open integration of the stator voltage from case to case measurements corresponding to the above claims are incorporated, which then serve for the adaptation and correction of the rotor position calculated by the voltage model.

31. A process as claimed in at least one of Claims 25, 26, 28, 29 or 30, characterised in that the rotor speed is determined by the addition of two corresponding sub-measurements, where these sub-measurements are used with a complementary converter switch position, and that during the addition the converter voltage is eliminated, and that the product of rotary field speed and stator flux linkage space vector follows directly from the space vector of the current-change sum and thus the rotor position follows from the argument of this complex term and the rotor speed follows from the absolute value.

32. A circuit arrangement for the execution of a process for the determination of machine-specific electromagnetic and mechanical state variables of synchronous machines (102) fed via converters (101), where the current changes, which are necessary due to the voltage jumps and for the calculation of the time change of the current space vector value, are tapped from current measuring devices (103) arranged between a converter (101) and the synchronous machine (102), characterised in that the actual currents from the output of a current detection module (104) are in each case supplied to a first input of a rotor position calculator (109) and to a first input of a current adjusting device (106), and that the actual currents detected by the current detection module (104) are detected via the current measuring devices (103) as analogue signals 1-3 at times which are preset by a digital control input (5), where a first line (L101) represents the actual currents in the form of phase currents or stator-specific phase current space vector components, and that the input of a fourth line (113) represents the operational setpoint current value from a superordinate speed- or torque control- or regulating unit, and that via a fifth line (L105) a digital control signal from a superordinate control unit (105) informs a current presetting module (107) as to when a measurement process is in progress and the operational setpoint current value (fourth line 113) is deactivated, and that ninth lines (L109) represent the setpoint currents which are compared in the current adjusting device (106) with the actual values, and that from the difference, by means of a current regulator, a 3-bit item of converter drive information is generated and via a switch-over logic circuit (110) controlled by the superordinate control unit (105) is applied via a third line (L103) to a bridge drive module (111), and that the superordinate control unit (105) generates current measurement commands (second line L102), and that a measurement signal generator (108) is caused to generate, via the digital command (sixth line L106), the measurement signals from the converter (101), where with the digital signals on a seventh line (L107) the converter control information corresponding to the measurement signals is applied via third lines (L103) to the bridge drive module (111) via the switch-over logic circuit (110) controlled by the superordinate control unit (105), and that the rotor position calculator (109) calculates the instantaneous rotor position (tenth line 112) from the converter drive information (eighth line L108) which represents the voltage space vector and from the time curves of the actual currents (first lines L101).

33. A process according to the preamble of Claim 1, characterised in that in the polyphase machine, in its embodiment as reluctance machine (202), the effect of measurement signals transmitted to the reluctance machine (202) is measured, where the measurement signals are voltage jumps which are generated by the converter (201) and which are signals suitable for analysis which either are additionally included or occur during operation, which signals effect current changes which are measured and fed to a calculator which calculates a complex characteristic quantity which is proportional or inversely proportional to the quotient of stator voltage space vector and time change of the stator current space vector, in the following referred to as complex characteristic quantity, where the direction of the voltage space vector follows from the known converter drive state, and which calculates the rotor position, where, due to the different reactances in the longitudinal and transverse directions, both in its real component and also in its imaginary component the complex characteristic quantity fluctuates approximately sinusoidally with double the value of the rotor position, and from the real and imaginary components calculates, in accordance with known methods of complex calculation, the double value of the rotor position angle to be detected.

**34.** A process as claimed in Claim 33, characterised in that the process step described in Claim 33 is repeated with a different voltage space vector direction and for each direction of measurement the local complex characteristic quantity is determined and [1] under the idealised assumption of a sinusoidal fluctuation of the real and imaginary components of the complex characteristic quantity, where its real component exhibits its extreme values in the magnetization axis and electrically 90° thereto and its imaginary component exhibits its zero transitions at these locations and its extremes at angles of electrically 45° + k.90°, using real components alone, imaginary components alone or a combination of the two, preferably in such manner that on a statistical average the deviation between the actual value of the rotor position and the value calculated by the above test measurements becomes minimal, and that then, using known methods of complex calculation, double the value of the rotor position angle to be detected is calculated.

**35.** A process as claimed in Claim 34, characterised in that a plurality of measurements, preferably corresponding to the number of phases, are combined, where these measurements are performed in different space vector directions, and that either only the real components of the complex vectors or only the imaginary components, preferably in accordance with the standard space vector definition, are combined to form new complex characteristic quantities, or both analyses, thus that of the real components and that of the imaginary components, are combined and preferably in such manner that the statistical properties of the error in the rotor position calculated in this way are minimised.

**36.** A process as claimed in one of Claims 33 to 35, characterised in that two measurements are performed, where the voltage space vector of the second measurement is different to the voltage space vector of the first measurement and where the zero voltage space vector is also not excluded, and that the difference between the voltage space vectors used in these measurements on the one hand and the difference between the time changes in the current space vectors calculated from these measurements on the other hand are formed, and these space vector variables replace the corresponding space vector variables in individual measurements.

**37.** A process as claimed in at least one of Claims 33 to 36, characterised in that two pairs of measurements performed within a sufficiently short time interval are combined if the voltage difference space vectors of the two pairs of measurements possess different arguments in that the voltage difference space vectors on the one hand and the current rise-rate difference space vectors on the other hand are subtracted and with these differences the complex characteristic quantity is formed, which latter has the property that, both in its real component and in its imaginary component, it fluctuates approximately sinusoidally with double the rotor position angle and is offset-free both in its imaginary component and in its real component compared to the complex characteristic quantity formed using voltage- and current rise-rate space vectors.

**38.** A process as claimed in one of Claims 33 to 37, characterised in that two pairs of measurements performed within a sufficiently short time interval are combined if the voltage difference space vectors of the two pairs of measurements possess different arguments in that the complex characteristic quantity of each pair of measurements is formed and then the difference between these two complex characteristic quantities is formed, which latter has the property that, both in its real component and in its imaginary component, it fluctuates approximately sinusoidally with double the flux angle and is offset-free both in its imaginary component and in its real component.

**39.** A process as claimed in one of Claims 33 to 36, characterised in that instead of the aforementioned second measurement, this voltage induced by the rotor rotation is calculated from instantaneous estimated values of the magnetic flux and its time derivative, and its influence upon the measurement result is compensated.

**40.** A process as claimed in one of Claims 33 to 37, characterised in that the measurement interval is defined such that the start and end of the measurement are fixed and the associated current values are measured.

**41.** A process as claimed in one of Claims 33 to 37, characterised in that the current values at the start and end of the measurement are fixed and the measurement times are measured.

**42.** A process as claimed in one of Claims 33 to 40, characterised in that the position of the measurement interval is selected such that current rise-rate and fall-rate measurements are symmetrical to the operating point of the current, where the current rise-rate and fall-rate measurements can be split into two parts.

**43.** A process as claimed in one of Claims 33 to 41, characterised in that the measurement is started following the decay of the transient responses of the electromagnetic variables triggered by the switching procedures.

44. A process as claimed in one of Claims 33 to 42, characterised in that the voltage-, current-, speed- and flux value-dependent offsets in the real and imaginary components which occur during the formation of the complex characteristic values are taken into consideration or eliminated by means of correction values, where the correction values either are obtained from tables or are calculated by simple, preferably linear correction functions, or on the overshooting of a specified value of the speed, are calculated by direct real time determination from the real and imaginary components via low-pass filters.

45. A process as claimed in one of Claims 33 to 43, characterised in that the obtained rotor position information is combined with the "voltage model" for reluctance machines, where the stator flux space vector is calculated by integration of the terminal voltage space vector minus the voltage drops across the stator resistor and thence the rotor position is calculated from the knowledge of the stator current space vector and the inductances in the longitudinal and transverse directions, and in speed ranges in which the voltage model operates unreliably due to the open integration of the stator voltage, from case to case measurements according to the above claims are incorporated, which measurements then serve for the adaptation and correction of the flux calculated by the voltage model.

46. A process as claimed in one of Claims 33 to 43, characterised in that the rotor position information is used to impress the desired flux-forming current component in the direction of the longitudinal axis and thus to define the magnetization of the machine, and at right angles thereto to impress the transverse current component necessary for the attainment of the required torque and thus to define the torque to be developed by the machine.

47. A process as claimed in one of Claims 33 to 44, characterised in that the flux information is improved upon by combination with a state model of the reluctance machine in that preferably the speed, the rotor position and the load torque are defined as state variables and the calculated rotor position angle is defined as measured variable, and via feedback, to be dimensioned in accordance with known methods of regulation technology, of the deviation between state variable, rotor position, and measured variable, rotor position angle, the estimated state variables are influenced in a manner so as to improve accuracy.

48. A process as claimed in at least one of Claims 33 to 45, characterised in that the rotor rotary field speed and/or the rotor position angle is/are calculated by the subtraction of two sub-measurements, where the two measured current-change space vectors are in each case multiplied by a complex rotator, the argument difference between which is equal to the difference angle between the two voltage space vectors of the two sub-measurements and the absolute values of which are equal and preferably 1, where a complex rotator can also possess the argument zero so that a complex multiplication can be spared with the result that in the subtraction the converter voltage is eliminated, or alternatively by means of a measurement, where this measurement is performed in the converter switch position "zero".

49. A process as claimed in at least one of Claims 33 to 48, characterised in that in the case of machines with rotors with magnetic-field-exciting elements, such as a coil or a permanent magnet, the influence of these elements is taken into consideration by the measurement of equivalent currents consequently arising in the corresponding axial directions.

50. A process as claimed in at least one of Claims 33 to 49, characterised in that in the case of machines of which the rotor also bears a dampening cage, in the following referred to as damper, or consists of material which is conductive to a specific extent and which acts as a damper, whereby the change in current in the stator due to the damper is defined via the stray paths, the flux axis is again detected as long as currents flow in the damper and by virtue of different magnetic properties of the stray paths relative to the flux axis and the rotor position.

51. A process as claimed in Claim 50, characterised in that with an appropriately small damper time constant after a switching procedure the decay of the damper and eddy currents is awaited, whereupon the measurements are performed.

52. A circuit arrangement for the execution of a process for the determination of machine-specific electromagnetic and mechanical state variables of reluctance machines (202) fed via converters (201), characterised in that the actual current values of the phases of the stator winding of the reluctance machine (202) are tapped from current measuring devices (203) arranged between the converter (201) and the reluctance machine (202) and are supplied to the first inputs of a current detection module (204) which at its output supplies, via a first line (L201), an item of generally digitalized information (either phase currents or stator-specific components of the current space vector) representative of the current space vector at the sampling times, where the sampling times are defined by a superordinate control unit (205) via a second digital line (L202) and where the information from the first line (L201) is used to determine the current-change space vector, or variables representative of the latter, in a current rise-rate calculator (206) employing a time interval supplied via a third line (L203) from a timer unit (210), where the timer unit (210) is controlled by the superordinate control unit (205) via a fourth line (L204), and that the superordinate control unit (205) controls a measurement process using a converter drive state-forming device (211) and by the switching over of a switch-over logic circuit (209) a drive module (212) of the converter (201) here is connected via a fifth line (L105) to the converter drive state-forming device (211) which - controlled by the superordinate control unit (205) via a sixth line (L206) - generates measurement signals which are assigned voltage space vectors directly applied from the converter (201) to the asynchronous machine (202), and that this voltage space vector information available via the sixth line (L206) is used via a seventh line (L207), together with the current-change space vector represented by an eighth line (L208), to calculate the flux angle in a flux angle calculator (208), which, improved upon via a tenth line (L210) in a dynamic reluctance motor model (213) by mathematical simulation of the reluctance machine in accordance with known methods, is available on a ninth line (L209), where with the dynamic reluctance motor model (213) simultaneously the speed on a thirteenth line (216) and the load torque on a fourteenth line (217) can be calculated, and that the flux angle is then used in the current regulating module (207) to calculate the operational converter drive state, in accordance with known rules of field-oriented regulation, from setpoint values of torque via a fifteenth line (214) and the flux value via a sixteenth line (215) and using the actual current information via an eleventh line (L211), and that the converter drive state is transmitted via a twelfth line (L212) and the switch-over logic circuit (209), which in operation is connected by the superordinate control unit (205) to the twelfth line (L212), to the drive module (212) of the converter (201). Fig. 3.

53. A circuit arrangement as claimed in Claim 52, characterised in that the connection between the rotor position calculator (208) and the field orientation- and current regulation module (207) leads across a dynamic reluctance motor model (213), and that the speed and load torque from a first and second output respectively of the dynamic reluctance motor model (213) are fed and linked to one or more superimposed regulating circuits via a first and second line (216, 217) respectively.

## Revendications

1. Procédé pour déterminer des variables d'état électromagnétiques et mécaniques liées à la machine, sur des machines à champ tournant électrodynamiques, alimentées par des convertisseurs (1, 101, 201), telles que des machines asynchrones (2), des machines synchrones (102), et des machines à réluctance (202), où, concernant la machine synchrone (102), la contre-réaction de signaux de mesure électrique appliquée à la machine synchrone (102) est mesurée, et où les signaux de mesure sont des sauts de tension générés par les convertisseurs eux-même, provoquant les fluctuations de courant qui sont mesurées et amenées à un calculateur qui détermine une grandeur caractéristique complexe et calcule la position du rotor à partir de la dépendance angulaire de la réactance du stator, et où, au démarrage de la machine synchrone (102) est réglée une pré-magnétisation, caractérisé en ce que, dans le cas de la machine à champ tournant, dans sa réalisation sous forme de machine asynchrone (2), pour déterminer le flux magnétique et pour appliquer des couples dynamiquement de première qualité, on opère avant le début de la mesure une magnétisation et la contre-réaction des signaux de mesure appliqués à la machine asynchrone (2) étant mesurée, les signaux de mesure étant des sauts de tension générés par le convertisseur (1) et provoquant les fluctuations de courant qui sont mesurées et sont amenées à un calculateur qui détermine une grandeur caractéristique complexe qui est proportionnelle au quotient entre l'indicateur spatial de la tension stator et la fluctuation temporelle de l'indicateur spatial de courant de stator, la direction de l'indicateur spatial de tension provenant de l'état de commande du convertisseur, qui est connu et qui est appelé ci-après la grandeur caractéristique complexe, calculateur qui calcule le flux magnétique, la grandeur caractéristique complexe fluctuant de façon à peu près sinusoïdale tant concernant sa partie réelle, qu'également concernant sa partie imaginaire, ceci en fonction du double de l'angle de flux magnétique et déterminant à partir de la partie réelle et de la partie imaginaire la valeur double de l'angle de flux magnétique recherché, ceci d'après les méthodes connues du calcul complexe.

2. Procédé selon la revendication 1, caractérisé en ce que les signaux de mesure, générés par le convertisseur (1) sont des sauts de tension soit produits de façon propre, soit se produisant par le fonctionnement, dans la mesure où les signaux se produisant du fait du fonctionnement conviennent du fait des algorithmes d'évaluation selon l'invention, et en ce que la grandeur caractéristique complexe déterminée par le calculateur est inversement proportionnelle au quotient entre l'indicateur spatial de tension de stator et la modification temporelle de l'indicateur spatial de tension stator.

3. Procédé selon les revendications 1 et 2, caractérisé en ce que l'étape de procédé décrite à la revendication 1 est répétée avec une direction modifiée de l'indicateur spatial de tension, en un nombre de préférence égal au nombre de brins, et pour chaque direction de mesure la grandeur caractéristique complexe locale est déterminée et, à partir de cela, en faisant une hypothèse idéalisée d'une fluctuation sinusoïdale de l'ampleur et de la phase de l'inductivité de dispersion différentielle complexe, sa valeur présentant des valeurs extrêmes orientées dans l'axe de magnétisation et à 90 degrés électriquement de celui-ci, et son argument en ces points présentant leurs passages à zéro et, présentant leurs extrêmes pour des angles situés à 45° + k.90° électriquement, en utilisant les parties réelles seules, les parties imaginaires seules ou une combinaison des deux, de préférence de manière que, en faisant la moyenne statistique, l'écart entre la valeur effective de l'axe de flux et la valeur déterminée par les mesures de test ci-dessus soit minimal et qu'alors, en utilisant les méthodes connues du calcul complexe, la valeur double de l'angle de flux magnétique recherché est déterminée.

4. Procédé selon les revendications 1 et 2, caractérisé en ce que la détermination de l'angle de flux électrique se fait par soustraction de deux mesures d'augmentation de courant pour lesquelles dans les deux mesures partielles on a le même indicateur spatial de tension, les indicateurs spatiaux de tension de stator, qui s'exercent en moyenne pendant les deux mesures partielles, devant être d'une différence telle que l'inductivité de dispersion, du fait de la différence des courants de stator, se distingue alors de façon détectable, faisant qu'alors la différence mesurée entre les deux vitesses de fluctuation des indicateurs spatiaux de courant soit un indicateur complexe dont la partie réelle et la partie imaginaire oscillent à une vitesse de circulation d'indicateur spatial de flux, de manière que l'argument de cet indicateur complexe soit déterminé, en étant en liaison univoque, par la position électrique de l'axe de flux.

5. Procédé selon les revendications 2, 3 et 4, caractérisé en ce qu'une combinaison de plusieurs mesures, de préférence en un nombre correspondant au nombre de brins, est effectuée, ces mesures étant effectuées pour différentes directions d'indicateur spatiales, et en ce que soit seules les parties réelles des complexes de l'indicateur, soit seules les parties imaginaires, de préférence de manière correspondante à la définition usuelle de l'indicateur spatial, soient combinées en de nouvelles grandeurs caractéristiques complexes, ou bien les deux évaluations, donc celle de la partie réelle et celle de la partie imaginaire, soient combinées, et notamment de manière que les propriétés statistiques de l'erreur de l'axe de flux déterminé de cette manière soient minimisées.

6. Procédé selon l'une des revendications 1 à 5, caractérisé en ce qu'il est effectué deux mesures, l'indicateur spatial de tension de la deuxième mesure étant soit opposé à l'indicateur spatial de tension de la première mesure, soit un indicateur spatial de tension zéro, et en ce que la différence des indicateurs spatiaux de tension utilisés dans ces mesures, d'une part, et la différence des fluctuations temporelles déterminées à partir de ces mesures des indicateurs spatiaux de courant, d'autre part, est formée et ces grandeurs d'indicateurs spatiaux étant utilisées à la place des grandeurs d'indicateurs spatiaux correspondants lors des mesures individuelles.

7. Procédé selon l'une des revendications 1 à 5, caractérisé en ce qu'il est effectué deux mesures, l'indicateur spatial de tension de la deuxième mesure étant un indicateur spatial de tension quelconque, qui est différent de celui de la première mesure, et en ce que cet indicateur spatial de tension peut également être l'indicateur spatial de tension zéro, et en ce que la différence entre les indicateurs spatiaux de tension utilisés dans ces mesures, d'une part, et la différence des fluctuations temporelles, déterminées à partir de ces mesures, des indicateurs spatiaux de courant, d'autre part, sont formées, et ces grandeurs d'indicateurs spatiaux étant utilisées à la place des grandeurs d'indicateurs spatiaux correspondants lors des mesures individuelles.

8. Procédé selon l'une des revendications 1 à 5, caractérisé en ce que la force électromotrice EMK, lorsque la machine asynchrone est en rotation, est calculée à partir des valeurs estimées instantanées du flux magnétique ainsi que de sa dérivée en fonction du temps et son influence sur le résultat des mesures faisant l'objet d'une compensation.

9. Procédé selon l'une des revendications 1 à 5, caractérisé en ce que deux couples de mesures effectués dans les limites d'un intervalle de temps suffisamment court sont combinés, dans la mesure où les indicateurs spatiaux de différence de tension des deux couples de mesures présentent des arguments différents, en constituant pour chaque couple de mesures la grandeur caractéristique complexe, puis en constituant la différence de ces deux grandeurs caractéristiques complexes, différence ayant la propriété, concernant tant sa partie réelle qu'également sa partie imaginaire, de fluctuer de façon à peu près sinusoïdale en fonction du double de l'angle de flux et ainsi d'avoir une partie imaginaire ainsi qu'également une partie réelle exemptes de décalage.

10. Procédé selon l'une des revendications 1 à 6, caractérisé en ce que l'intervalle de mesure est défini de façon que le début de la mesure et la fin de la mesure soient fixés et que les valeurs du courant afférentes soient mesurées.

11. Procédé selon l'une des revendications 1 à 6, caractérisé en ce que les valeurs de courant au début de la mesure et à la fin de la mesure sont fixées et les temps de mesure sont mesurés.

12. Procédé selon l'une des revendications 1 à, ou 11, caractérisé en ce que la position de l'intervalle de mesure est choisie telle que les mesures d'augmentation et de chute de courant sont situées symétriquement par rapport au point de travail du courant, les mesures d'augmentation et de chute de courant pouvant être décomposées en deux parties.

13. Procédé selon l'une des revendications 1 à 12, caractérisé en ce que la mesure est commencée après amortissement des processus oscillatoires déclenchés par les traitements par commutation, concernant les grandeurs électromagnétiques.

14. Procédé selon l'une des revendications 1 à 13, caractérisé en ce que la détermination du signe du flux magnétique s'effectue par le fait que le point de travail magnétique est décalé dans l'axe de flux fixé d'après les méthodes ci-dessus, en ce qu'un indicateur spatial de courant est influencé approximativement et la grandeur caractéristique complexe étant aussitôt déterminée - comme évoqué ci-dessus - et sa valeur calculée, un indicateur spatial de courant étant ensuite influencé dans le sens inverse par rapport à celui de l'indicateur spatial de courant ayant été influencé auparavant et la valeur étant de nouveau calculée, puis, à partir du fait que la direction de magnétisation coïncide avec le minimum des deux valeurs calculées auparavant, la direction de magnétisation coïncidant avec l'angle de flux cherché est déterminée.

15. Procédé selon l'une des revendications 1 à 14, caractérisé en ce que les décalages en tension, en courant, en vitesse de rotation et en flux, toutes ces valeurs étant dépendantes entre elles, décalages qui se produisent lors de la formation des valeurs caractéristiques complexes, décalages concernant la partie réelle, respectivement la partie imaginaire, sont pris en compte, respectivement éliminés, au moyen de valeurs correctrices, les valeurs correctrices étant soient prélevées dans des tables, soit déterminées à partir de simples fonctions de correction, de préférence linéaires, soit, en cas de dépassement d'une valeur déterminée de la vitesse de rotation, déterminées par détermination en temps réel directe à partir des parties réelles et respectivement parties imaginaires, par l'intermédiaire de filtres passe-bas.

16. Procédé selon l'une des revendications 1 à 15, caractérisé en ce que la prise en compte de l'influence du courant d'induit sur la direction de flux ayant été déterminée s'effectue au moyen d'une valeur correctrice qui est soit prélevée à partir de tables, soit calculée au moyen de fonctions correctrices simples, de préférence linéaires.

17. Procédé selon l'une des revendications 1 à 16, caractérisé en ce que l'information de flux obtenue est combinée avec le "modèle de tension" connu, pour des machines asynchrones et, dans des plages de vitesses de rotation dans lesquelles le modèle de tension opérant par intégration ouverte de la tension de stator travaille de façon non fiable, les mesures effectuées d'après les revendications ci-dessus et servant alors d'adaptation, respectivement de correction du flux déterminé par le modèle de tension sont alors le cas échéant intégrées.

18. Procédé selon l'une des revendications 1 à 17, caractérisé en ce que l'information de flux est utilisée pour influencer dans la direction du flux déterminé la composante électrique souhaitée constituant le flux et ainsi fixer la magnétisation de la machine et influencer perpendiculairement par rapport à cela la composante électrique souhaitée constituant le couple et fixer ainsi le couple à développer par la machine.

19. Procédé selon l'une des revendications 1 à 18, caractérisé en ce que l'information de flux est améliorée par combinaison avec un modèle d'état de la machine asynchrone, en définissant de préférence la vitesse de rotation, l'angle de flux et le couple de charge comme étant des grandeurs d'état, ainsi que l'axe de flux, déterminé comme étant une grandeur de mesure, et en faisant intervenir, par l'intermédiaire d'une contre-réaction, dont l'ampleur doit être dimensionnée suivant les méthodes connues de la technique de la régulation, de l'écart entre la grandeur d'état qu'est l'angle de flux et la grandeur de mesure qu'est l'axe de flux, aux grandeurs d'état estimées, d'une manière augmentant la précision.

20. Procédé selon au moins l'une des revendications 1 à 19, caractérisé en ce que la vitesse de champ tournant est déterminée par addition de deux mesures partielles correspondantes, ces mesures partielles étant utilisées avec une position complémentaire de l'interrupteur de convertisseur de manière que, lors de l'addition, la tension du convertisseur soit éliminée et que, du fait de l'indicateur spatial, la somme de la fluctuation de courant suive directement le produit constitué de la vitesse du champ tournant et de l'indicateur spatial d'enchaînement de flux et ainsi, à partir de l'argument de cette expression complexe, suive la direction de l'indicateur spatial de champ et, à partir de l'amplitude, suive la vitesse du champ tournant.

21. Procédé selon au moins l'une des revendications 1 à 19, caractérisé en ce que la vitesse de champ tournant et l'indicateur spatial de flux sont déterminés par soustraction de deux mesures partielles, les deux indicateurs spatiaux de fluctuation de courant mesuré étant multipliés chacun par un rotateur complexe dont la différence d'argument est égale à angle de différence entre les deux indicateurs spatiaux de tension des deux mesures partielles et dont les valeurs sont égales et de préférence valent 1, un rotateur complexe pouvant également présenter l'argument zéro, de sorte que l'on fait l'économie d'une multiplication complexe, de sorte qu'il suive directement le produit du fait de l'indicateur spatial du résultat de la soustraction le produit constitué de la vitesse du champ tournant et de l'indicateur spatial d'enchaînement de flux et qu'ainsi, à partir de l'argument de cette expression complexe, il suive la direction de l'indicateur spatial de flux et à partir de l'amplitude, il suive le produit constitué de la vitesse de champ tournant et de la valeur de l'indicateur spatial de flux.

22. Procédé selon au moins l'une des revendications 1 à 20, caractérisé en ce que la vitesse de champ tournant et l'indicateur spatial de flux sont déterminés par le fait que l'indicateur spatial de fluctuation de courant complexe est mesuré par suite de l'indicateur spatial de tension zéro et que du fait de l'indicateur spatial de fluctuation de courant complexe il suit directement le produit constitué de la vitesse de champ tournant et de l'indicateur spatial de flux et ainsi, à partir de cette expression complexe, il suit la direction de l'indicateur spatial de flux et à partir de l'amplitude, il suit le produit constitué de la vitesse de champ tournant et de la valeur de l'indicateur spatial de flux.

23. Circuit de commutation pour mettre en oeuvre un procédé de détermination de grandeurs d'état électromagnétiques et mécaniques liées à une machine sur des machines asynchrones (1) alimentées par un convertisseur (1), caractérisé en ce que les valeurs réelles d'intensité des brins de l'enroulement de stator de la machine asynchrone (2) sont prélevés par des dispositifs de mesure de courant (3) disposés entre un convertisseur (1) et la machine asynchrone (2) et amenés aux premières entrées d'un module d'appréhension de courant (4), et en ce que le module d'appréhension de courant (4) fournit à la sortie, par l'intermédiaire d'une première ligne (L1), une information représentative de l'indicateur spatial de courant aux instants d'exploration, les instants d'exploration étant définis par une commande (5) d'ordre hiérarchique supérieur, par l'intermédiaire d'une deuxième ligne (L2) numérique, l'information venant de la première ligne (L1) étant utilisée pour déterminer l'indicateur spatial de variation de courant, respectivement les grandeurs la représentant, dans un calculateur d'augmentation de courant (6) en utilisant un intervalle de temps fourni par une unité de minuteur (10) par l'intermédiaire d'une troisième ligne (L3), l'unité de minuteur (10) étant commandée par la commande (5) d'ordre hiérarchique supérieur par l'intermédiaire d'une quatrième ligne (L4) et en ce que par la commande (5) d'ordre hiérarchique supérieur est commandé un déroulement de mesure, avec utilisation d'un formateur d'état de commande de convertisseur (11), en ce qu'alors un module de commande (12) du convertisseur (1) commande, par commutation d'une logique de commutation (9), par l'intermédiaire d'une cinquième ligne (L5), le formateur d'état de commande de convertisseur (11) qui - commandé par la commande (5) d'ordre hiérarchique supérieur, par l'intermédiaire d'une sixième ligne (L6) - produit des signaux de mesure, et en ce qu'aux signaux de mesure sont associés directement par le convertisseur (1) des indicateurs spatiaux de tension appliqués à la machine asynchrone (2) et cette information d'indicateur spatial de tension, se présentant sur la sixième ligne (L6), étant utilisée par une septième ligne (L7) conjointement avec l'indicateur spatial de variation de courant représenté par une huitième ligne (L8), pour déterminer l'angle de flux, ceci étant fait dans un calculateur d'angle de flux (8), qui passe par une dixième ligne (L10), pour aller dans un modèle de moteur asynchrone (13) dynamique, effectue une amélioration par reproduction mathématique de la machine asynchrone (2), selon des méthodes connues, place cette information sur une neuvième ligne (L9), où on peut déterminer avec le modèle asynchrone dynamique (13) également simultanément la vitesse de rotation sur une quinzième ligne (16) et le couple sur une seizième ligne (17), et en ce que l'angle de flux est utilisé dans un module à orientation de champ et à régulation de courant (7) pour calculer l'état de commande de convertisseur, dans le cadre du fonctionnement, d'après les règles connues de la régulation à orientation de champ, à partir de valeurs de consigne concernant le couple, par l'intermédiaire d'une treizième ligne (14) et de la valeur de flux par l'intermédiaire d'une quatorzième ligne (15) et en utilisant l'information de courant réel, venant par une onzième ligne (L11), et en ce que l'état de commande de convertisseur, amené par une douzième ligne (L12) et par la logique de commutation (9) réagissant en fonction du fonctionnement par la commande (5) d'ordre hiérarchique supérieur et allant à la douzième ligne (L12), est transmis au module de commande (12) du convertisseur (1). Figure 1

24. Circuit selon la revendication 23, caractérisé en ce que la liaison entre le calculateur d'angle de flux (8) et le module à orientation de champ et à régulation de courant (7) est guidée par un modèle de moteur asynchrone dynamique (13) et en ce que la vitesse de rotation, respectivement le couple, est amené depuis une première, respectivement une deuxième, sortie du modèle de moteur asynchrone dynamique (13), par l'intermédiaire d'une première, respectivement d'une deuxième ligne (16, 17), à un ou plusieurs circuits de régulation superposés et sont soumis à une combinaison.

25. Procédé selon le préambule de la revendication 1, caractérisé en ce que, dans la machine à champ tournant, dans son mode de réalisation en machine synchrone (102), la détermination de position de rotor s'effectue au moyen des méthodes connues du calcul complexe par soustraction de deux mesures d'augmentation de courant, pour lesquelles dans deux mesures partielles on a le même indicateur spatial de tension et l'indicateur spatial de tension de stator que l'on a en moyenne pendant les deux mesures partielles devant être d'une différence faisant que l'inductivité de stator se distingue alors de façon remarquable du fait de la différence des courants de stator, faisant qu'alors la différence mesurée entre les deux vitesses de fluctuation d'indicateur spatial de courant est un indicateur complexe, dont la partie réelle et la partie imaginaire oscillent à la vitesse de rotation du rotor, de sorte que l'argument de cet indicateur complexe est placé dans une liaison univoque avec la position électrique du rotor.

26. Procédé selon la revendication 25, caractérisé en ce qu'une combinaison de plusieurs mesures, en nombre correspondant de préférence au nombre de brins, est effectuée, en ce que ces mesures sont effectuées dans différentes directions d'indicateur spatial et en ce que soit seules les parties réelles des indicateurs complexes, soit seules les parties imaginaires, de préférence de manière correspondante à la définition usuelle de l'indicateur spatial, sont groupées en donnant de nouvelles grandeurs caractéristiques complexes qui ont les deux la propriété que leurs arguments correspondent à la position électrique du rotor ou que les deux évaluations donc celle des parties réelles et celle des parties imaginaires sont combinées et notamment de préférence de manière que la valeur statistique de l'erreur de la position de rotor déterminée de cette manière soit minimisée.

27. Procédé selon les revendications 25 et 26, caractérisé en ce que les processus de mesure indiqués dans ces deux revendications sont combinés et en ce qu'est effectuée une élimination de l'influence de la tension induite par soustraction de jeux de deux mesures, l'indicateur spatial de tension de la deuxième mesure étant soit opposé à l'indicateur spatial de tension de la première mesure, soit étant l'indicateur spatial de tension zéro, et en ce que la différence des indicateurs spatiaux de tension utilisés dans ces mesures, d'une part, et la différence des fluctuations temporelles, déterminées à partir de ces mesures, des indicateurs spatiaux de courant, d'autre part, sont formées et ces grandeurs d'indicateurs spatiaux étant utilisées à la place des grandeurs d'indicateurs spatiaux que l'on a pour des mesures individuelles.

28. Procédé selon au moins l'une des revendications 25 à 27, caractérisé en ce que les décalages dépendant quantitativement de la tension, du courant, de la vitesse de rotation et du flux, décalages se produisant lors de la formation des valeurs caractéristiques complexes, dans la partie réelle, respectivement la partie imaginaire, sont pris en compte, respectivement éliminés, par des valeurs correctrices, les valeurs correctrices étant soit prises dans des tables, soit déterminées par des fonctions correctrices simples, de préférence linéaires, soit en cas de dépassement d'une certaine valeur de la vitesse de rotation, déterminées par détermination en temps réel directe à partir des parties réelles, respectivement imaginaires, par l'intermédiaire de filtres passe-bas.

29. Procédé selon au moins l'une des revendications 25 à 28, caractérisé en ce qu'une prise en considération de l'influence du courant d'induit sur la position de rotor déterminée s'effectue au moyen d'une valeur correctrice qui est soit prélevée dans des tables, soit calculée au moyen de fonctions correctrices simples, de préférence linéaires.

30. Procédé selon au moins l'une des revendications 25 à 29, caractérisé en ce que l'information de position de rotor obtenue est combinée à un modèle de tension pour des machines synchrones par intégration de l'équation de tension stator et, dans des plages de vitesses de rotation dans lesquelles le modèle de tension travaille de façon non fiable du fait de l'intégration ouverte de la tension de stator, des mesures, faites selon les revendications ci-dessu étant, le cas échéant, intégrées, ces mesures servant alors d'adaptation, respectivement de correction, à la position de rotor déterminée par le modèle de tension.

31. Procédé selon au moins l'une des revendications 25, 26, 28, 29 ou 30, caractérisé en ce que la vitesse de rotor est déterminée par addition de deux mesures partielles correspondantes, ces mesures partielles étant utilisées avec une position d'interrupteur de convertisseur complémentaire et en ce que, lors de l'addition, la tension de convertisseur est éliminée, et en ce que, du fait que l'indicateur spatial de la somme de la fluctuation de courant, elle suit directement le produit constitué de la vitesse de champ tournant et de l'indicateur spatial d'enchaînement de flux de stator, et ainsi à partir de l'argument de cette expression complexe, elle suit la position de rotor et, à partir de l'amplitude, elle suit la vitesse de rotor.

32. Circuit pour mettre en oeuvre un procédé de détermination de grandeurs d'état électromagnétiques et mécaniques liées à la machine, sur des machines synchrones (102) alimentées par l'intermédiaire de convertisseurs (101), les fluctuations de courant, venant des sauts de tension et nécessaires au calcul de la fluctuation temporelle de la valeur de l'indicateur spatial de courant, étant appréhendées par des dispositifs de mesure de courant (103) disposés entre un redresseur (101) et la machine synchrone (102), caractérisé en ce que les courants réels venant de la sortie d'un module d'appréhension de courant (104) sont chacun amenés à une première entrée d'un calculateur de position de rotor (109) et à une première entrée d'un dispositif de suivi de courant (106), et en ce que les courants réels appréhendés par le module d'appréhension de courant (104) sont appréhendés, par l'intermédiaire des dispositifs de mesure de courant (103), sous forme de signaux 1 à 3 analogiques, aux moments prédéterminés, par une entrée de commande (5) numérique, une première ligne (L101) représentant les courants réels sous la forme de courants de brins ou de composantes d'indicateur spatial de courant de brins liées au rotor, et en ce que l'entrée d'une quatrième ligne (113) représente la valeur de courant de consigne, liée au fonctionnement, venant d'une commande ou d'une régulation de vitesse de rotation ou de couple, d'un ordre hiérarchique supérieur, et en ce qu'un signal de commande numérique venant d'une commande (105) d'ordre hiérarchique supérieur, par une cinquième ligne (L105) informe un module d'allocation de courant (107) du moment où un processus de mesure se déroule et la valeur de courant de consigne liée au fonctionnement (quatrième ligne 113) étant mise hors d'action, et en ce que des neuvièmes lignes (L109) représentent les courants de consigne devant être comparés aux valeurs réelles dans le dispositif de suivi de courant (106), et en ce que, à partir de la différence, au moyen d'un régulateur de courant, on produit une information de commande de convertisseur, information à 3 bits, et, par une logique de commutation (110) commandée par la commande (105) d'ordre hiérarchique supérieur, on l'applique par une troisième ligne (L103) sur un module de commande en pont (111), et en ce que la commande (105) d'ordre hiérarchique supérieur génère des ordres de mesure de courant (deuxième ligne L102), et en ce qu'un générateur de signal de mesure (108) est autorisé à générer, par l'ordre numérique (sixième ligne L106) les signaux de mesure venant du convertisseur (101), l'information de commande du convertisseur conforme au signal de mesure étant amenée avec les signaux numériques sur une septième ligne (L107) par l'intermédiaire d'une logique de commutation (110) commandée par la commande (105) hiérarchiquement supérieure, au module de commande en pont (111) par des troisièmes lignes (L103) et en ce que le calculateur de position de rotor (109) calcule la position actuelle du rotor (dixième ligne L112) à partir de l'information de commande de convertisseur (huitième ligne L108), information représentant l'indicateur spatial de tension et les évolutions temporelles des courants réels (première ligne L101).
Figure 2

33. Procédé selon le préambule de la revendication 1, caractérisé en ce que, dans la machine à champ tournant, dans son mode de réalisation sous forme de machine à réluctance (202) on mesure la contre-réaction de signaux de mesure prélevés sur la machine à réluctance (102), les signaux de mesure étant des sauts de tension générés par le convertisseur (201) qui soit sont des signaux introduits en plus, soit des signaux produits en fonctionnement et convenant aux fins de l'évaluation, ces signaux provoquant des fluctuations de courant qui sont mesurées et amenées à un calculateur qui détermine une grandeur caractéristique complexe qui est proportionnelle ou inversement proportionnelle au quotient formé à partir de l'indicateur spatial de tension de stator et de la fluctuation temporelle de l'indicateur spatial de courant stator et est appelée ci-après grandeur caractéristique complexe, la direction de l'indicateur spatial de tension résultant de l'état de commande de convertisseur, connu, et calculant la position de rotor, la grandeur caractéristique complexe fluctuant de façon à peu près sinusoïdale dans la direction longitudinale et transversale tant concernant sa partie réelle que concernant également sa partie imaginaire, avec le double de la valeur de la position de rotor et déterminant, à partir de la partie réelle et de la partie imaginaire, la valeur double de l'angle de position de rotor recherché, d'après les méthodes connues du calcul complexe.

34. Procédé selon la revendication 33, caractérisé en ce que l'étape de procédé décrite à la revendication 33 est répétée avec une direction d'indicateur spatial de tension modifiée et pour chaque direction de mesure étant déterminée la grandeur caractéristique complexe locale et à partir de cela en faisant une hypothèse idéalisée d'une allure sinusoïdale de la fluctuation de la partie réelle et de la partie imaginaire de la grandeur caractéristique complexe, sa partie réelle ayant les valeurs extrêmes orientées dans l'axe de magnétisation et à 90 degrés électriquement par rapport à celui-ci et sa partie imaginaire à ces endroits endroits ayant ses passages à zéro et présentant ses extrêmes pour des angles valant électriquement

$45°+k90°$, avec utilisation de parties réelles seules, de parties imaginaires seules ou d'une combinaison des deux, de préférence de manière que, en moyenne statistique, l'écart entre la valeur effective de la position de rotor et la valeur déterminée par les mesures de test ci-dessus soit minimal et en déterminant ensuite, en utilisant les méthodes connues du calcul complexe, la valeur double de l'angle de position rotor.

35. Procédé selon la revendication 34, caractérisé en ce qu'on effectue une combinaison de plusieurs mesures, en nombre correspondant de préférence aux nombres de brins, ces mesures étant effectuées dans différentes directions de l'indicateur spatial et en ce que soit seulement les parties réelles des indicateurs complexes, soit seulement les parties imaginaires, de préférence de manière correspondant à la définition usuelle de l'indicateur spatial, sont groupées pour former de nouvelles grandeurs caractéristiques complexes, ou bien les deux évaluations, dont celle des parties réelles et celle des parties imaginaires étant combinées, notamment de préférence de manière que les propriétés statitisques de l'erreur de la position de rotor déterminée de cette manière soient minimisées.

36. Procédé selon l'une des revendications 33 à 35, caractérisé en ce que l'on effectue deux mesures, l'indicateur spatial de tension de la deuxième mesure étant différent de l'indicateur spatial de tension de la première mesure et l'indicateur spatial de tension zéro n'étant pas non plus exclu, et en ce que la différence des indicateurs spatiaux de tension utilisés dans ces mesures, d'une part, et la différence des fluctuations temporelles, déterminées à partir de cette mesure, des indicateurs spatiaux de courant, d'autre part, étant formée, et ces grandeurs d'indicateurs spatiaux étant prises à la place des grandeurs d'indicateurs spatiaux correspondants, pour les mesures individuelles.

37. Procédé selon au moins l'une des revendications 33 à 36, caractérisé en ce que deux couples de mesure effectués dans les limites d'un intervalle de temps suffisamment court sont combinés dans la mesure où les indicateurs spatiaux de différence de tension des deux couples de mesure présentent des arguments différents, les indicateurs spatiaux de différence de tension, d'une part, et les indicateurs spatiaux de différence d'augmentation de courant, d'autre part, étant soustraits et avec ces différences étant formée la grandeur caractéristique complexe qui présente les propriétés faisant qu'elle fluctue, tant concernant sa partie réelle, qu'également sa partie imaginaire, de façon à peu près sinusoïdale, en fonction du double de l'angle de position du rotor et qu'elle est sans décalage, concernant tant sa partie imaginaire, qu'également sa partie réelle, vis-à-vis de la grandeur caractéristique complexe constituée en utilisant des indicateurs spatiaux d'augmentation de tension et de courant.

38. Procédé selon l'une des revendications 33 à 37, caractérisé en ce que deux couples de mesure effectués dans les limites d'un intervalle de temps suffisamment court sont combinés, dans la mesure où les indicateurs spatiaux de différence de tension des deux couples de mesure présentent des arguments différents, en ce que de chaque couple de mesure est constituée la grandeur caractéristique complexe et qu'ensuite la différence de ces deux grandeurs caractéristiques complexes est formée, différence ayant la propriété qu'elle fluctue de façon à peu près sinusoïdale avec le double de l'angle de flux, tant pour sa partie réelle, qu'également pour sa partie imaginaire, et qu'elle est sans décalage tant concernant sa partie imaginaire, qu'également sa partie réelle.

39. Procédé selon l'une des revendications 33 à 36, caractérisé en ce qu'au lieu de la deuxième mesure citée ci-dessus, cette tension provoquée par la rotation du rotor est calculée à partir de valeurs estimées instantanées du flux magnétique, ainsi que de sa dérivée en fonction du temps, et son influence sur le résultat des mesures faisant l'objet d'une compensation.

40. Procédé selon l'une des revendications 33 à 37, caractérisé en ce que l'intervalle de mesure est défini de manière que le début de mesure et la fin de mesure sont fixés et que les valeurs des courants afférents sont mesurées.

41. Procédé selon l'une des revendications 33 à 37, caractérisé en ce que les valeurs de courant au début de la mesure et à la fin de la mesure sont fixées et les moments où les mesures sont faites sont mesurés.

42. Procédé selon l'une des revendications 33 à 40, caractérisé en ce que la position de l'intervalle de mesure est choisie telle que les mesures d'augmentation et de diminution de courant sont situées symétriquement par rapport au point de travail du courant, les mesures d'augmentation et de diminution du courant étant susceptibles d'être décomposées en deux parties.

43. Procédé selon l'une des revendications 33 à 41, caractérisé en ce que la mesure est commencée après amortissement des processus de mise en oscillation des grandeurs électromagnétiques, déclenchés par les traitements de commutation.

44. Procédé selon l'une des revendications 33 à 42, caractérisé en ce que les décalages en tension, en courant, en vitesse de rotation et en flux, dont les valeurs dépendent les unes des autres et qui se produisent lors de la formation des valeurs caractéristiques complexes, sont pris en compte, respectivement éliminés, concernant leur partie réelle et leur partie imaginaire, au moyen de valeurs correctrices, les valeurs correctrices étant soit prélevées dans des tables, soit déterminées par des fonctions correctrices simples, de préférence linéaires, soit en cas de dépassement d'une valeur donnée de vitesse de rotation, par détermination en temps réel directe à partir des parties réelle ou imaginaire, par l'intermédiaire des filtres passe-bas.

45. Procédé selon l'une des revendications 33 à 43, caractérisé en ce que l'information de position de rotor obtenue est déterminée avec le "modèle de tension" pour des machines à réluctance, l'indicateur spatial de flux de stator étant déterminé par intégration de l'indicateur spatial de tension aux bornes, déduction faite des chutes de tension sur la résistance de stator et à partir de cela du fait de la connaissance de l'indicateur spatial de courant de stator et des inductances dans la direction longitudinale et transversale, la position du rotor étant calculée, combinée et dans les plages de vitesses de rotation dans lesquelles le modèle de tension travaille de façon non fiable suite à l'intégration ouverte de la tension de stator, des mesures faites le cas échéant selon les revendications ci-dessus étant intégrées et servant alors d'adaptation ou de correction du flux déterminé par le modèle de tension.

46. Procédé selon l'une des revendications 33 à 43, caractérisé en ce que l'information de position de rotor est utilisée pour influencer dans la direction de l'axe longitudinal la composante de courant formant le flux souhaité et ainsi fixer la magnétisation de la machine et, perpendiculairement à cela, influencer la composante de courant transversal nécessaire pour obtenir le couple souhaité et fixer ainsi le couple à développer par la machine.

47. Procédé selon l'une des revendications 33 à 44, caractérisé en ce que l'information de flux est améliorée par combinaison avec un modèle d'état de la machine à réluctance, en définissant de préférence la vitesse de rotation, la position de rotor et le couple à titre de grandeurs d'état ainsi que l'angle de position de rotor déterminé à titre de grandeurs de mesure et par l'intermédiaire d'une contre-réaction à dimensionner d'après les méthodes connues de la technique de régulation, contre-réaction de l'écart entre la grandeur d'état qu'est la position de rotor et la grandeur de mesure qu'est l'angle de position du rotor, est intégré dans les grandeurs d'état estimées, d'une manière qui augmente la précision.

48. Procédé selon au moins l'une des revendications 33 à 45, caractérisé en ce que, par soustraction de deux mesures partielles, les deux indicateurs spatiaux de variation de courant mesurés sont multipliés par un rotateur complexe dont la différence d'argument est égale à l'angle de différence entre les deux indicateurs spatiaux de tension des deux mesures partielles et dont les amplitudes sont égales, de préférence valent 1, un rotateur complexe pouvant également présenter l'argument zéro, de manière qu'on puisse faire l'économie d'une multiplication complexe, de sorte que, lors de la soustraction, on élimine la tension du convertisseur ou, en variante, par une mesure, cette mesure étant effectuée à la position "zéro" de l'interrupteur de convertisseur, on détermine la vitesse du champ tournant du rotor et/ou l'angle de position du rotor.

49. Procédé selon au moins l'une des revendications 33 à 48, caractérisé en ce que pour des machines ayant des rotors avec des éléments excitant le champ magnétique, tels qu'une bobine ou un aimant permanent, l'influence de ces éléments est prise en compte par la mesure de courants équivalents produits par eux dans les directions axiales correspondantes.

50. Procédé selon au moins l'une des revendications 33 à 49, caractérisé en ce que pour des machines dont le rotor porte également une cage d'amortissement, appelée ci-après également amortisseur, ou bien est constitué d'un matériau qui, dans une certaine mesure, est conducteur de l'électricité, agissant comme un amortisseur, faisant que la fluctuation du courant dans le stator est déterminée du fait de l'amortisseur par les chemins de dispersion, tant que des courants passent dans l'amortisseur et l'axe de flux est détecté de nouveau du fait des propriétés magnétiques différentes des chemins d'amortissement par rapport à l'axe du flux ou à la position du rotor.

51. Procédé selon la revendication 50, caractérisé en ce que dans le cas où la constante de temps d'amortisseur est de courte durée, correspondante, on attend, après un traitement de commutation, jusqu'à ce que les courants d'amortisseur, respectivement les courbes de Foucault, aient été amortis, puis on effectue alors les mesures.

52. Circuit pour mettre en oeuvre un procédé de détermination des grandeurs d'état électromagnétiques et mécaniques liées à la machine sur des machines à réluctance (202) alimentées par des convertisseurs (201), caractérisé en ce que les valeurs réelles de courant des brins du bobinage stator de la machine à réluctance (202) sont appréhendés par des dispositifs de mesure de courant (203) disposés entre le convertisseur (201) et la machine à réluctance (202) et sont amenés aux premières entrées d'un module d'appréhension de courant (204) fournit à la sortie par une première ligne (L201) 1) une information représentant l'indicateur spatial de courant aux instants de l'exploration et qui est en général numérisée (soit des courants de phase, soit des composantes liées au stator de l'indicateur spatial de courant), les instants d'exploration étant définis par une commande (205) hiérarchiquement supérieure par l'intermédiaire d'une deuxième ligne (L202) numérique et l'information venant de la première ligne (L201) étant utilisée pour déterminer l'indicateur spatial de variation de courant, respectivement les grandeurs le représentant, dans un calculateur d'augmentation de courant (206) en utilisant un intervalle de temps fourni par une unité de minutage (210) par l'intermédiaire d'une troisième ligne (L203), l'unité de minutage (210) étant commandée par une commande (205) hiérarchiquement supérieure par une quatrième ligne (L204) et en ce qu'avec la commande (205) hiérarchiquement supérieure est commandé un déroulement de mesure en utilisant un formateur d'état de commande de convertisseur (211), et alors un module de commande (212) du convertisseur (201) produisant, par commutation d'une logique de commutation (209), par une cinquième ligne (L105), est reliée au formateur d'état de commande de convertisseur (211), qui - en étant commandé par la commande (205) hiérarchiquement supérieure par une sixième ligne (L206) -produit des signaux de mesure qui sont associés directement du convertisseur (201) à l'indicateur spatial de tension appliqué de la machine asynchrone (202), et en ce que cette information d'indicateur spatial de tension, présente sur la sixième ligne (L206), est utilisée, conjointement avec l'indicateur spatial de variation de courant représenté par une huitième ligne (L208), pour déterminer l'angle de flux dans un calculateur d'angle de flux (208) qui, par une dixième ligne (L210), dans un modèle de moteur à réluctance (213) dynamique, est amélioré par reproduction mathématique de la machine à réluctance, suivant des méthodes connues, est mis à disposition sur une neuvième ligne (L209), la vitesse de rotation étant susceptible d'être déterminée simultanément également sur une treizième ligne (216) et le couple sur une quatorzième ligne (217), avec le modèle de moteur à réluctance dynamique (213), et en ce que l'angle de flux est alors mis à contribution dans le module de régulation de courant (207) pour calculer l'état de commande de convertisseur en fonction du fonctionnement, suivant les règles connues de la régulation à orientation de champ, à partir de valeurs de consigne du couple, par une quinzième ligne (214) et la valeur de flux par une seizième ligne (215) et avec utilisation de l'information de courant réel par une onzième ligne (L211), et en ce que l'état de commande de convertisseur est amené par une douzième ligne (L212) et le circuit de commutation (209) qui réagit selon le fonctionnement de la commande (205) hiérarchiquement supérieure à la douzième ligne (L212) est transmis au module de commande (212) du convertisseur (201).
Figure 3

53. Circuit selon la revendication 52, caractérisé en ce que la liaison entre le calculateur de position de rotor (208) et le module d'orientation de champ et de régulation de courant (207) est guidée par un modèle de moteur à réluctance dynamique (213), et en ce que la vitesse de rotation, respectivement le couple de charge, est amenée et combinée, depuis une première, respectivement une deuxième, sortie du modèle de moteur à réluctance dynamique (213), par une première, respectivement une deuxième ligne (216, 217), à un ou plusieurs circuits de régulation superposés.

EP 0 579 694 B1

Fig. 1

34

114 o——
115 o——
116 o——

101

111

L102

L103

110

L101

105

106

L109

107

113

L105

L107

L106

108

L108

109

L112

Fig. 2

Fig. 3